# EUROPEAN PATENT APPLICATION

(11) **EP 4 421 109 A1**
(43) Date of publication of application: **28.08.2024**
(21) Application number: 23199194.4
(22) Date of filing: 22.09.2023
(51) Int. Cl.: C08G 65/40, B01D 71/68, C08G 65/48, C08G 75/23, C08L 81/06

(54) **SIDE-CHAIN FUNCTIONALIZED POLYARYLETHERSULFONES AND THEIR USE IN CHROMATOGRAPHY APPLICATIONS**

(71) Applicant: Solvay Specialty Polymers USA, LLC, Alpharetta, Georgia 30005-3914 (US)
(72) Inventor: NAIR, Kamlesh, Alpharetta, GA-30005-3914 (US)
(74) Representative: Ferri, Isabella

(57) **Abstract**

The invention relates to a poly(aryl ether sulfone) (PAES) copolymer (P2) with bound functional moieties Z, a chromatography polymeric stationary material comprising (P2), use of the stationary material for chromatography applications, and methods for making the material. Also disclosed are methods of making (P2) from an aminated side-chain PAES copolymer (P1), including coupling a functional compound Z* to nitrogen atoms of aminated groups of (P1) to provide the functional moieties Z in (P2). The functional moiety Z may include at least one selected from a tri- C2⁺ alkyl or tri-methyl moiety which forms a quaternary ammonium structure with the nitrogen atoms, an alkyl carbonyl moiety, a carboxylic acid moiety, an aromatic sulfonate moiety, a sugar acid moiety, a zwitterionic moiety, a haloalkyl carbonyl moiety, a hydroxyl moiety; or a multifunctional moiety comprising two or more complementary functional moieties.

## Description

### CROSS-REFERENCE TO RELATED APPLICATIONS

Not applicable

### STATEMENT REGARDING FEDERALLY SPONSORED RESEARCH OR DEVELOPMENT

Not applicable.

### TECHNICAL FIELD

The invention relates to a side-chain functionalized poly(aryl ether sulfone) (PAES) copolymer having at least a portion of its side chains coupled to a functional group, its use in making articles, and methods of making such PAES copolymer from an aminated side-chain PAES copolymer. Such side-chain functionalized PAES copolymers are particularly suitable for chromatography applications.

### BACKGROUND

Poly(aryl ether sulfone) (PAES) polymers are highly thermally stable polymers with excellent toughness and impact strength. PAES is a generic term used to describe any polymer containing at least one sulfone group (-SO₂-), at least one ether group (-O-) and at least one arylene group.

These resins are generally made by polycondensation reactions typically using dichlorodiphenyl sulfone (the sulfone monomer) along with other aromatic diols such as Bisphenol A (BPA), 4,4'-biphenol (BP) or 4,4'-dihydroxydiphenylsulfone (DHDPS) also known as Bisphenol S.

A commercially important group of PAES includes polysulfone polymers identified herein as polysulfones, in short PSU. PSU polymers contain recurring units derived from the condensation of bisphenol A (BPA) and a dihalogen monomer, for example 4,4'-dichlorodiphenyl sulfone (DCDPS). Such PSU polymers are commercially available from Solvay Specialty Polymers USA LLC under the trademark UDEL^{®}. The structure of the recurring units of such a PSU polymer is shown below:

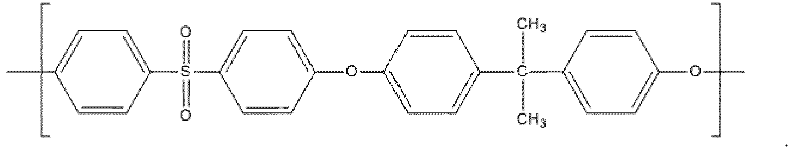

Another important group of PAES includes polyethersulfone polymers, in short PES. PES polymers derived from the condensation of the dihydroxy monomer bisphenol S (BPS) and a dihalogen monomer, for example 4,4'-dichlorodiphenyl sulfone (DCDPS). Such PES polymers are commercially available from Solvay Specialty Polymers USA LLC under the trademark VERADEL^{®}. The structure of the recurring units of such a PES polymer is shown below:

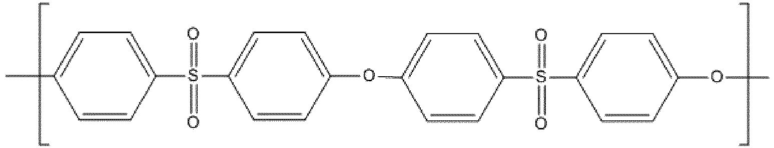

These resins are good solubility in polar aprotic solvents and hence are extensively used to make hollow fiber or flat sheet membranes mainly for filtration and other fluid purification processes. PSU and PES polymers are frequently used to prepare membranes to be used in contact with biological fluids, for example blood.

In biopharmaceutical applications, there is a need for separating complex biological mixtures containing constituents such as virus, proteins, enzymes, DNA, RNA, and amino acids etc. Preparative chromatography is generally used for such separation and thus is a form of purification of a specific constituent by the removal of the other constituents.

Chromatography used for the separation of such mixture generally comprises preparing the mixture (generally a solution) in a fluid solvent called the mobile phase, and carrying it through a system, such as a column, a capillary tube, a plate, or a sheet, on which a material called the stationary phase is fixed. Because the different constituents of the mixture tend to have different affinities for the stationary phase and are retained for different lengths of time depending on their interactions with its surface sites, the constituents travel at different apparent velocities in the mobile fluid, causing them to separate. Column chromatography is a separation technique in which the stationary phase is solid and inside a tubular unit. Particles of the solid stationary phase may fill the whole inside volume of the tubular unit or be concentrated on or along the inside tube wall leaving an open, unrestricted path for the mobile phase in the middle part of the tube. The solid stationary phase in biopharmaceutical applications is typically a highly specific functionalized membrane.

In these applications, the separation can be either based on:
- Affinity (e.g., metal affinity),
- Hydrophobic interactions,
- Ion-exchange interactions or
- Biochemical immobilization amongst other interactive chemical reactions.

Affinity chromatography is a method of separating a biomolecule from a mixture, based on a highly specific macromolecular binding interaction between the biomolecule and another substance. Affinity chromatography is useful for its high selectivity and resolution of separation compared to other chromatographic methods. The specific type of binding interaction depends on the target biomolecule. The binding interactions of ligand / target molecule that are frequently exploited are as follows:
- antigen / antibody,
- enzyme / substrate analogue,
- receptor / hormone,
- avidin / biotin,
- Protein A or G / immunoglobins,
- protein / nucleic acid.

Hydrophobic Interaction Chromatography (HIC) is a purification technique that separates constituents, such as proteins, from a complex biological mixture, based on hydrophobic interactions between constituents and the chromatographic stationary phase. HIC can provide a non-denaturing approach, preserving native structures and potentially protein activity. The HIC stationary phase is generally a polymeric resin lightly substituted with hydrophobic groups.. These groups can range from methyl, ethyl, propyl, butyl, octyl, or phenyl groups. At high salt concentrations (hydrophobic effects are augmented by increased ionic strength), the non-polar side chains on the surface on proteins "interact" with the resin hydrophobic groups; that is, both types of groups are excluded by the polar solvent. Ammonium sulfate is frequently used as salt. Thus, the complex biological mixture containing proteins is applied to the column in a buffer which is highly polar, which drives an association of hydrophobic patches on the target protein with the polymeric stationary phase. The removal of the 'bound' protein from the polymeric stationary phase is effected by passing through the stationary phase an eluent which is preferably an aqueous buffer with decreasing salt concentrations, but could be carried out by increasing concentrations of detergent (which disrupts hydrophobic interactions), or changes in pH main the eluent. In general, HIC is advantageous if the target biomolecule is sensitive to pH change or harsh solvents typically used in other types of chromatography but not high salt concentrations.

Ion exchange chromatography (IEC) uses an ion exchange mechanism to separate constituents from a complex biological mixture based on their respective charges. IEC is usually performed in columns. IEC uses a charged stationary phase to separate charged constituents including anions, cations, amino acids, peptides, and proteins. In traditional IEC methods the stationary phase is an ion-exchange polymeric resin that carries charged functional groups that interact with oppositely charged groups of the target constituent to retain. There are two types of IEC: Cation-Exchange and Anion-Exchange Chromatographies. In the Cation-Exchange Chromatography the stationary phase has negative charge and the exchangeable ion is a cation, whereas, in the Anion-Exchange Chromatography the stationary phase has positive charge and the exchangeable ion is an anion.

The diverse chemical modifications of polymeric membranes to be used for chromatography is challenging synthetically due to several factors. In the present invention, we describe the synthesis of various embodiments of side-chain functionalized PAES copolymers which can be obtained from a parent copolymer precursor using different coupling chemistries. The parent copolymer precursor is thus used as a universal scaffold with reactive side chains which permit functionalization with a variety of functional groups depending on the desired type of separation.

In order to develop such a universal scaffold, a 2,2'diallyl bisphenol is copolymerized along with a dihalogen monomer, for example 4,4'-dichlorodiphenyl sulfone (DCDPS) and another diol, generally BPA, BP or BPS to form a PAES copolymer precursor having side chain olefin groups. These olefin groups can be then further functionalized via a variety of chemical transformations such as hydrothiolation, grafting, hydrohalogenation etc.

The allyl side chain copolymer precursor described above is preferably further functionalized using hydrothiolation chemistry. The hydrothiolation (thiol-ene reactions) can be either carried out by free radical-thermal reaction, by free radical-UV reaction, by base-catalyzed reaction or by nucleophilic-catalyzed reaction with a compound R₂ - SH, where R₂ is a functional group which is selected depending on the desired application for the PAES copolymer. The amine functional group is an extremely versatile group which can be modified by attaching a diverse array of functional groups. WO 2020/187684A1 (SOLVAY SPECIALTY POLYMERS USA), incorporated herein in the present description, discloses functionalized side-chain PAES copolymers, particularly with amine functionalized side chains. In particular, an aminated PAES copolymer is produced using hydrothiolation chemistry with cysteamine hydrochloride in the presence of a free radical initiator.

Such aminated side-chain PAES copolymers offer the possibility to attach or immobilize bioactive compounds (e.g., having anti-coagulant properties) for preparing functional membrane structures suitable for hemodialysis while avoiding or eliminating the injection of such bioactive compound(s) into the blood of the patient undergoing hemodialysis. The functionalization of side-chain PAES copolymers with a bioactive compound of generally large molecular weight is described in WO 2022/171683A1 (SOLVAY SPECIALTY POLYMERS USA).

The present invention aims to provide functionalization of a PAES copolymers by way of coupling a functional compound to amine groups in the polymer side chains. The selection of the functional compound is preferably dependent on its intended use in a particular chromatography application.

### SUMMARY

The invention is as disclosed below and in the appended claims.

A first aspect of the present invention is directed to a functionalized side-chain poly(aryl ether sulfones) (PAES), hereinafter "copolymer (P2)".

A third aspect of the present invention relates to the use of the functionalized PAES copolymer (P2) in making a chromatography polymeric stationary material and in particular in making functionalized chromatography membranes and/or beads, for example intended for use in affinity chromatography, in hydrophobic interaction chromatography and/or in ion exchange chromatography.

A fourth aspect of the present invention relates to a chromatography polymeric stationary material comprising, or made from, the functionalized PAES copolymer (P2) described herein or the functionalized PAES copolymer (P2) manufactured by the process described herein according to the second aspect. The chromatography polymeric stationary material is preferably intended for use in affinity chromatography, hydrophobic interaction chromatography (HIC) and/or ion-exchange chromatography (IEC). The chromatography polymeric stationary material may be used for separation of a target biomolecule from a biological fluid.

A fifth aspect of the present invention relates to a method of making a chromatography polymeric stationary material comprising, or made from, the functionalized PAES copolymer (P2) described herein or the functionalized PAES copolymer (P2) manufactured by the process described according to the second aspect.

The various aspects, advantages, and features of the invention will be more readily understood and appreciated by reference to the detailed description and examples.

### DEFINITIONS

In the present descriptive specification, some terms are intended to have the following meanings.

The term "solvent" is used herein in its usual meaning that, it indicates a substance capable of dissolving another substance (solute) to form a uniformly dispersed mixture at the molecular level. In the case of a polymeric solute it is common practice to refer to a solution of the polymer in a solvent when the resulting mixture is transparent and no phase separation is visible in the system. Phase separation is taken to be the point, often referred to as "cloud point", at which the solution becomes turbid or cloudy due to the formation of polymer aggregates.

As used herein, "BPA" means Bisphenol A or 4,4'-isopropylidenediphenol; "BPS" means Bisphenol S or 4,4'-dihydroxydiphenyl sulfone (DHDPS); "DCDPS" means 4,4'-dichlorodiphenyl sulfone; "DFDPS" means 4,4' difluorodiphenyl sulfone; daBPA means 4,4'-diallyl Bisphenol A; daBP means 4,4'-diallyl Biphenol; daBPS means 4,4'-diallyl Bisphenol S; NMP means N-methyl-2-pyrrolidone; ADVN means 2, 2'-Azobis (2,4 dimethylvaleronitrile); EDC means N-(3-Dimethylaminopropyl)-N'-ethylcarbodiimide hydrochloride; and NHS means N-Hydroxy succinimide.

The term "betaine (meth)acrylate" or "B(m)A" will encompass betaine methacrylate, betaine acrylate, or both.

The term "membrane" is used herein in its usual meaning, that is to say it refers to a discrete, generally thin, interface that moderates the permeation of chemical species in contact with it. This interface may be molecularly homogeneous, that is, completely uniform in structure (dense membrane), or it may be chemically or physically heterogeneous, for example containing voids, holes or pores of finite dimensions (porous membrane). A membrane generally has an outer surface and inner surfaces inside pores with which chemical species come in contact.

The term "complementary functional moieties" means that these moieties are chemically compatible with each other as they do not react with each other.

As used herein, polymeric "beads" are generally of substantially spherical shape and are generally produced by coagulation of a polymer solution in a non-solvent or poor solvent. The bead sizes generally vary from 30 µm to greater than 2 mm in diameter, dependent on the intended chromatography applications.

As used herein, polymeric "granules" or "pellets" are usually made by shaping by dry-pressing or slip-casting and/or milling followed by size classification. The so obtained granules or pellets have irregular, often angular shapes. The granules or pellets sizes generally vary from 50 µm to greater than 1 mm in diameter, dependent on the intended chromatography applications.

The term "biological fluid" may be fermentation medium, cell culture, protein lysate, bacteria-containing fluid, virus-containing fluid, DNA-containing fluid (such as containing plasmid, DNA primer, or DNA fragment), RNA-containing fluid (such as containing mRNA or tRNA), antibody-containing fluid (e.g., containing monoclonal antibodies, polyclonal antibodies, or antibody fragments, wherein the antibody may be IgA, IgG or IgM immunoglobulin), vaccine-containing fluid, hormone-containing fluid, enzyme-containing fluid, or any combination thereof. A DNA primer is a short nucleic acid sequence that provides a starting point for DNA synthesis. A plasmid is a small circular DNA molecule within a cell (such as bacteria) that is physically separated from chromosomal DNA and can replicate independently.

The term "recurring unit" designates the smallest unit of a PAES polymer which is repeating in the chain and which is composed of a condensation of a diol compound and a dihalo compound. The term "recurring unit" is synonymous to the terms "repeating unit" and "structural unit".

The proportions of recurring units in the polymer are given in mol.% relative to the total amount of moles of recurring units in the polymer, unless stated otherwise.

The term "homopolymer" encompasses a polymer which only has one type of recurring unit. The term "copolymer" encompasses a polymer which may have two or more different types of recurring units.

The weight average molecular weight (M_{w}) and the number average molecular weight (Mₙ) of PAES copolymers (P0), (P1), (P2) can be estimated by gel-permeation chromatography (GPC) using ASTM D5296 calibrated with polystyrene standards and using a solvent as a mobile phase. The mobile phase may be selected from any solvent for the PAES copolymers described herein, such as methylene chloride, N-Methyl-2-pyrrolidone (NMP), sulfolane, or N,N'-dimethylacetamide (DMAc). Particularly suitable methods are the GPC Method 1 for copolymers (P2) and (P1) and the GPC Method 2 for the copolymers (P0), both described in the examples section.

The polydispersity index (PDI) of PAES copolymers (P0), (P1), (P2) is hereby expressed as the ratio of weight average molecular weight (M_{w}) to number average molecular weight (Mₙ).

The molecular weight of any of the functional moieties may be provided by their respective suppliers or may be represented by the formula weight (in g/mol).

The glass transition temperature (Tg) of the PAES copolymers (P0), (P1), (P2) is preferably measured by differential scanning calorimetry (DSC), preferably according to ASTM D3418 or according to the method provided in the Examples.

In the present specification, the choice of an element from a group of elements also explicitly describes:
- the choice of two or the choice of several elements from the group,
- the choice of an element from a subgroup of elements consisting of the group of elements from which one or more elements have been removed.

In the passages of the present specification which will follow, any description, even though described in relation to a specific embodiment, is applicable to and interchangeable with other embodiments of the present disclosure. Each embodiment thus defined may be combined with another embodiment, unless otherwise indicated or clearly incompatible. In addition, it should be understood that the elements and/or the characteristics of a composition, a product or article, a process or a use, described in the present specification, may be combined in all possible ways with the other elements and/or characteristics of the composition, product or article, process or use, explicitly or implicitly, this being done without departing from the scope of the present description.

In the present specification, the description of a range of values for a variable, defined by a bottom limit, or a top limit, or by a bottom limit and a top limit, also comprises the embodiments where the variable is chosen, respectively, within the range of values: excluding the bottom limit, or excluding the top limit, or excluding the bottom limit and the top limit. Any recitation herein of numerical ranges by endpoints includes all numbers subsumed within the recited ranges as well as the endpoints of the range and equivalents.

The term "comprising" includes "consisting essentially of" and also "consisting of".

The term "consisting essentially of' in relation to a composition, compound, product, polymer, solution, process, method, etc is intended to mean that any additional element or feature which may not be explicitly described herein and which does not materially affect the basic and novel characteristics of such a composition, compound, product, polymer, solution, process, method, etc can be included in such an embodiment. For example, when a composition, compound, product, polymer, or solution "consists essentially of" required elements, it is generally understood that any additional element may be present in not more than 1 wt% based on the total weight of the composition, compound, product, polymer, solution, etc or not more than 1 mol% based on the total number of moles of the composition, compound, product, polymer or solution.

The term "optional" or "optionally" means that the subsequently described component or method step or circumstance may or may not occur, and that the description includes instances where the component or method step or circumstance occurs and instances where it does not.

It should be understood that the elements, properties and/or the characteristics of a polymer, composition, product or article, a process, method or a use, described in the present specification, may be combined in all possible ways with the other elements, properties and/or characteristics of the polymer, composition, product or article, process, method or use, explicitly or implicitly, this being done without departing from the scope of the present description.

The use of the singular 'a' or 'one' herein includes the plural unless specifically stated otherwise.

In addition, if the term "approximately", "about" or "*ca*." is used before a quantitative value, the present teachings also include the specific quantitative value itself, unless specifically stated otherwise. As used herein, the term "approximately", "about" or "*ca*." refers to a +-10% variation from the nominal value unless specifically stated otherwise.

The disclosure of all patent applications, and publications cited herein are hereby incorporated by reference, to the extent that they provide exemplary, procedural or other details supplementary to those set forth herein. Should the disclosure of any patents, patent applications, and publications which are incorporated herein by reference conflict with the description of the present application to the extent that it may render a term unclear, the present description shall take precedence.

### DETAILED DESCRIPTION OF PREFERRED EMBODIMENTS

### Copolymer (P2)

The functionalized PAES copolymer (P2) comprises:
- recurring units (R_{P2}) of formula (M); 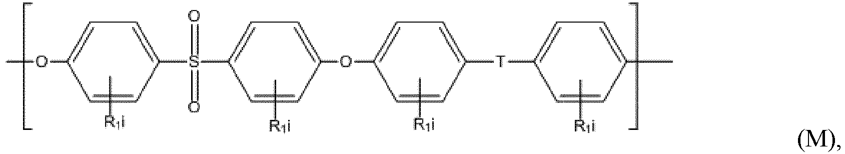
- recurring units (R*_{P2}) of formula (Q): 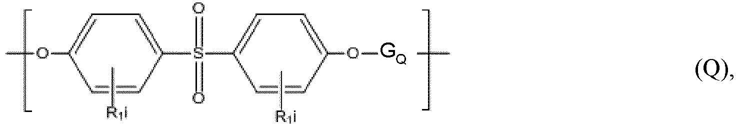 wherein
   - each R₁ is independently selected from the group consisting of a halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
   - each i is an integer independently selected from 0 to 4;
   - T is selected from the group consisting of a bond, -CH₂-; -O-; -SO₂-; -S-; -C(O)-; -C(CH₃)₂- ;-C(CF₃)₂-; -C(=CCl₂)-; -N=N-; -C(CH₃)(CH₂CH₂COOH)-; -RₐC=CR_{b}-, where each Rₐ and R_{b}, independently of one another, is a hydrogen or a C1-C12-alkyl, C1-C12-alkoxy, or C6-C 18-aryl group; -(CF₂)ₘ- with m being an integer from 1 to 6; an aliphatic divalent group, linear or branched, of up to 6 carbon atoms, preferably -(CH₂)_{m'}- with m' being an integer from 1 to 6; and combinations thereof;
   - G_{Q} is at least one formula selected from formulae (G_{Q1}), (G_{Q2}), (G_{Q3}), (G_{Q4}), (G_{Q5}), or (G_{Q6}): 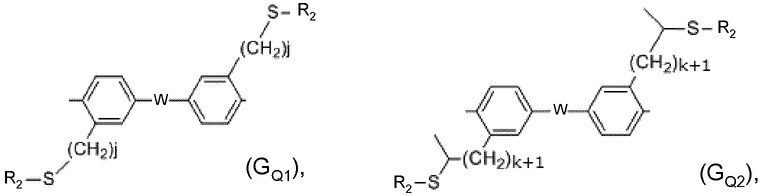 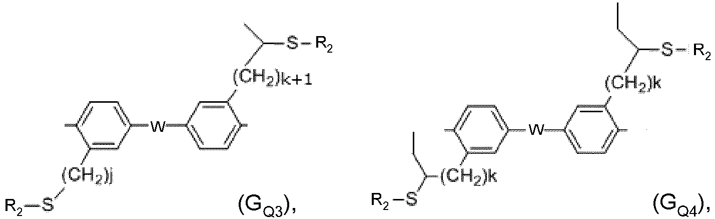 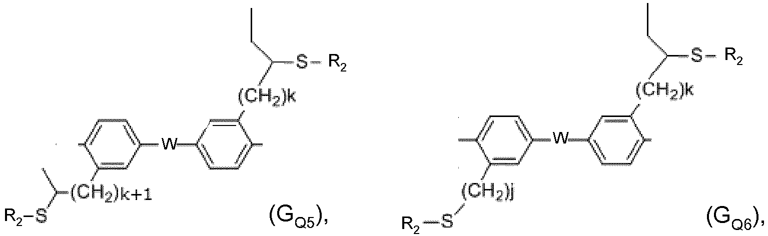 wherein
      - each k is an integer independently selected from 0 to 4;
      - each j is an integer independently selected from 2 to 7;
      - W is a bond, -C(CH₃)₂- or -SO₂-, preferably -C(CH₃)₂- or -SO₂-, more preferably -C(CH₃)₂-;
- R₂ is represented by the following formula: -(CH₂)ₚ-NR_{c}**Z**, with p being an integer selected from 1 to 5, preferably p being 2, with Rc being independently a C1-C6 alkyl, H or an halide X selected from Cl, Br or I, Rc preferably being H or X, and with **Z** representing a functional moiety which is coupled to R₂, preferably coupled or bound to the nitrogen atom in R₂.

In preferred embodiments, the molar ratio of the recurring units (R_{P2})/recurring units (R*_{P2}) may be at least 0. 1/100, or at least 1/100, or at least 1/5, or at least 1/4, or at least 1/3, or at least 1/2, and/or at most 100/0.1, or at most 100/1, or at most 50/1, or at most 40/1, or at most 30/1, or at most 25/1, or at most 20/1. or at most 15/1. or at most 12/1. For example, the molar ratio of the recurring units (R_{P2})/recurring units (R*_{P2}) may be from 1/100 to 100/1, or from 1/5 to 100/1, or from 1/3 to 50/1, or from 1/3 to 30/1 or from 1/3 to 20/1, or preferably from 1/2 to 50/1, or from 1/2 to 30/1 or from 1/2 to 20/1.

The functionalized PAES copolymer (P2) may also comprise recurring units (R*_{P1}) of formula (N): 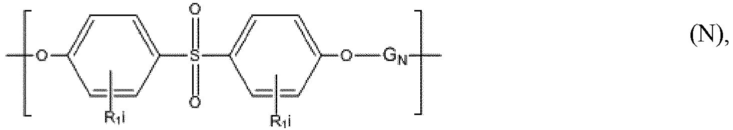 wherein
- each R₁ and i are defined in the same manner as for the formula (M);
- G_{N} is selected from the group consisting of at least one of the following formulae (G_{N1}), (G_{N2}), (G_{N3}), (G_{N4}), (G_{N5}) and (G_{N6}): 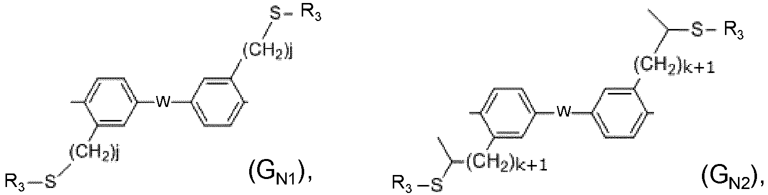 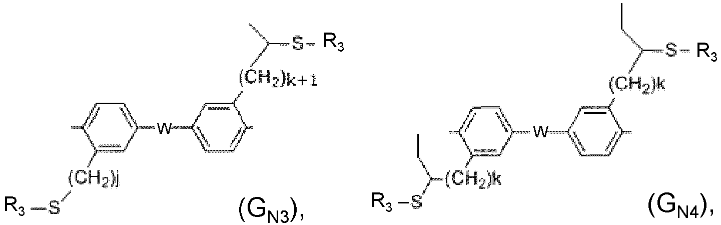 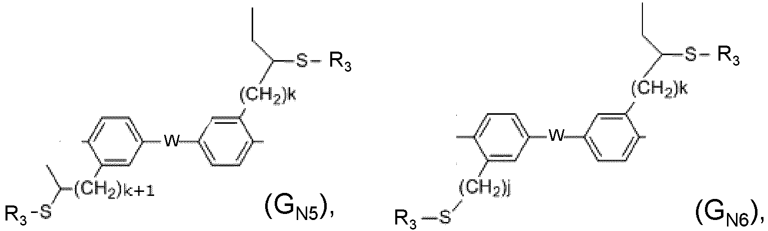 wherein
   - each k is an integer independently selected from 0 to 4;
   - each j is an integer independently selected from 2 to 7;
   - W is a bond, -C(CH₃)₂- or -SO₂-, preferably -C(CH₃)₂- or -SO₂-, more preferably - C(CH₃)₂-;
   - R₃ is represented by the following formula: -(CH₂)ₚ-NHR_{d}, with p being selected from 1 to 5, with R_{d} being independently a C1-C6 alkyl or H, preferably represented by any of the following formula: -(CH₂)₂-NHR_{d} or -(CH₂)ₚ-NH₂, more preferably represented by the following formula: -(CH₂)₂-NH₂.

The functionalized PAES copolymer (P2) may also comprise **Z**-bound end-groups, hydroxyl end-groups, amine end-groups and/or acid end-groups, preferably **Z-**bound and/or amine end-groups.

The functionalized PAES copolymer (P2) may comprise recurring units (R_{P2}) and at least two, or at least three, or at least four, different recurring units (R*_{P2}) selected from formulae (G_{Q1}), (G_{Q2}), (G_{Q3}), (G_{Q4}), (G_{Q5}) and/or (G_{Q6}), with W being a bond, -C(CH₃)₂- or -SO₂-, preferably being -C(CH₃)₂- or -SO₂-, more preferably being -C(CH₃)₂-.

The functionalized PAES copolymer (P2) of the present invention may comprise at least 30 mol. %, or at least 35 mol. %, or at least 40 mol. %, or at least 45 mol. %, or at least 50 mol. %, or at least 55 mol. %, or at least 60 mol.%, or at least 65 mol.%, or at least 70 mol.%, or at least 75 mol.%, or at least 75 mol.%, or at least 80 mol.%, or at least 85 mol.%, or at least 90 mol.%, of the recurring units (R_{P2}) of formula (M), based on the total number of moles of recurring units in the functionalized PAES copolymer (P2).

The functionalized PAES copolymer (P2) may comprise collectively at least 50 mol.%, or at least 60 mol.%, or at least 70 mol.%, or at least 80 mol.%, or at least 90 mol.%, or at least 95 mol.%, or at least 98 mol.% of the recurring units (R_{P2}), (R*_{P2}) and optionally (R*_{P1}), based on the total number of moles of recurring units in the functionalized PAES copolymer (P2) .

The functionalized PAES copolymer (P2) may even preferably consists essentially of the recurring units (R_{P2}), (R*_{P2}) and optionally (R*_{P1}).

The functionalized PAES copolymer (P2) may have a M_{w} of :
- at least 20 000 g/mol, at least 25 000 g/mol, at least 30 000 g/mol, at least 35 000 g/mol, at least 40 000 g/mol, at least 45 000 g/mol, at least 55 000 g/mol, at least 60 000 g/mol, at least 65 000 g/mol, or at least 70 000 g/mol, and/or
- at most 350 000 g/mol, at most 340 000 g/mol, at most 330 000 g/mol, at most 320 000 g/mol, or at most 310 000 g/mol.

The molecular weights (Mn, Mw) for the functionalized PAES copolymer (P2) are preferably measured by a GPC method, and particularly using NMP as mobile phase and polystyrene standard. A particularly suitable method is the GPC Method 2 described in the examples section.

The functionalized PAES copolymer (P2) may have a polydispersity index (= Mw/Mn) of
- at least 2, at least 2.1, or at least 2.2, and/or
- at most 7, at most 6.5, at most 6, at most 5.5, at most 5, at most 4.5, or at most 4.

The functionalized PAES copolymer (P2) may be in the form of powder, granules or pellets, beads or prills before being used for the preparation of a chromatography polymeric stationary material, such as a chromatography membrane or beads, or of polymer solutions/slurries such as polymeric dope solutions.

The functionalized PAES copolymer (P2) may be dried to remove moisture / solvent before being used for the preparation of a chromatography polymeric stationary material.

### Recurring units (R_{P2})

The recurring units (R_{P2}) in the functionalized PAES copolymer (P2) is of the formula (M), wherein each R₁, i, and T were previously described.

In some embodiments, the functionalized PAES copolymer (P2) is such that T in recurring units (R_{P2}) is selected from the group consisting of a bond, -SO₂-, -C(CH₃)₂- and any combination thereof. The functionalized PAES copolymer (P2) of the present invention may, for example, comprise recurring units (R_{P2}) in which T is -C(CH₃)₂- and also recurring units (R_{P2}) in which T is -SO₂-.

In some embodiments, the functionalized PAES copolymer (P2) is such that each R₁ is independently selected from the group consisting of a C1-C12 moiety optionally comprising one or more than one heteroatoms; sulfonic acid and sulfonate groups; phosphonic acid and phosphonate groups; amine and quaternary ammonium groups.

In preferred embodiments, the functionalized PAES copolymer (P2) is such that i is zero for each R₁ of recurring units (R_{P2}).

In some embodiments, the functionalized PAES copolymer (P2) is a **Z-**functionalized PSU, PES, or PPSU copolymer, in which the recurring units (R_{P2}) have one formula selected from formulae (M1), (M2) or (M3), respectively:

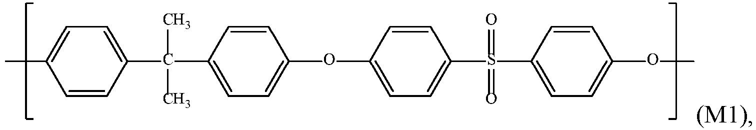

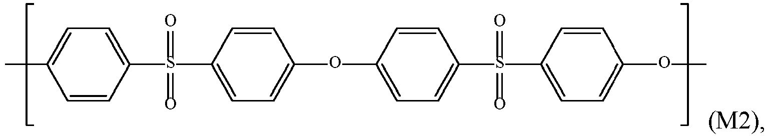

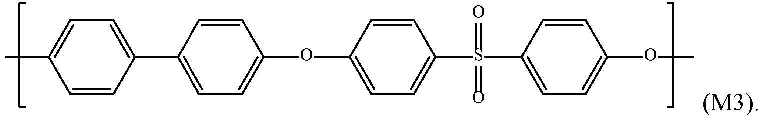

In preferred embodiments, the functionalized PAES copolymer (P2) is a Z-functionalized PSU copolymer (P2), in which the recurring units (R_{P2}) have the formulae (M1), described previously; or a Z-functionalized PES copolymer (P2), in which the recurring units (R_{P2}) have the formula (M2) described previously; or a Z-functionalized PPSU copolymer (P2), in which the recurring units (R_{P2}) have the formula (M3) described previously.

In more preferred embodiments, the functionalized PAES copolymer (P2) is a Z-functionalized PSU or PES copolymer (P2), in which the recurring units (R_{P2}) have the formulae (M1) or (M2), respectively.

### Recurring units (R*_{P2})

The recurring units (R*_{P2}) in the functionalized PAES copolymer (P2) are of the formula (Q) previously described.

In some embodiments, i is zero for each R₁ of the recurring units (R*_{P2}).

In some embodiments, k is 0 and j is 3 in the recurring units (R*_{P2}).

In some embodiments, G_{Q} is at least one formula selected from the following formulae (G'_{Q1}), (G'_{Q2}), (G'_{Q3}), (G'_{Q4}), (G'_{Q5}), or (G'_{Q6}): 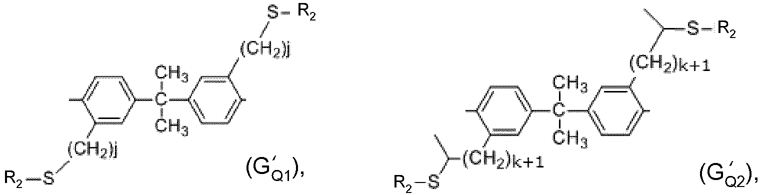 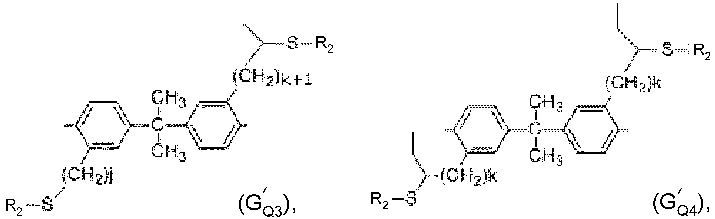 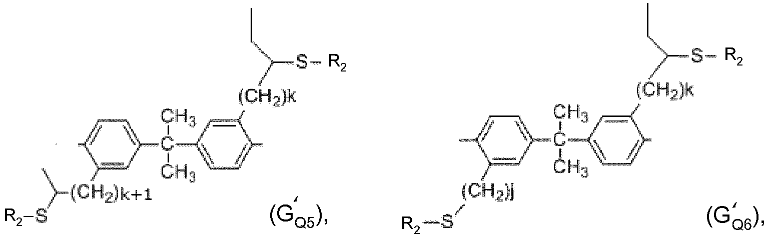 wherein
- each k, j and R₂ in the formulae (G'_{Q1}), (G'_{Q2}), (G'_{Q3}), (G'_{Q4}), (G'_{Q5}), (G'_{Q6}) are the same as defined for formulae (G_{Q1}), (G_{Q2}), (G_{Q3}), (G_{Q4}), (G_{Q5}), (G_{Q6}).

Preferred embodiments for R₂ are applicable to any of the formulae (G_{Q1}), (G_{Q2}), (G_{Q3}), (G_{Q4}), (G_{Q5}), (G_{Q6}), (G'_{Q1}), (G'_{Q2}), (G'_{Q3}), (G'_{Q4}), (G'_{Q5}), and/or (G'_{Q6}).

Preferably, p in R₂ is 2, and R₂ is represented by following formula: -(CH₂)₂-NR_{c}**Z**.

Preferably, R_{c} in R₂ is H or an halide X being selected from Cl, Br or I, and R₂ is represented by any of the following formula: -(CH₂)ₚ-NH**Z** and -(CH₂)ₚ-N⁺**Z**X⁻.

More preferably, R_{c} in R₂ is H or an halide X being selected from Cl, Br or I; p in R₂ is 2; and R₂ is represented by any of the following formula: -(CH₂)₂-NH**Z** and -(CH₂)₂-N⁺**Z**X⁻.

In embodiments in which the functional moiety **Z** is a moiety Z6 derived from a sugar acid polymer or copolymer (such as derived from an alginate), the functional moiety **Z6** may have a molecular weight (Mn) of at most 700,000 g/mol, at most 600,000 g/mol, at most 500,000 g/mol or at most 400,000 g/mol, and/or at least 1,000 g/mol, at least 2,000 g/mol, at least 3,000 g/mol, at least 5,000 g/mol, or at least 10,000 g/mol.

In embodiments in which the functional moiety **Z** is not a moiety Z6 derived from a sugar acid polymer or copolymer, the functional moiety **Z** in R₂ may have a formula weight of:
- less than 3000 g/mol, at most 2500 g/mol, at most 2000 g/mol, at most 1500 g/mol, at most 1000 g/mol, at most 800 g/mol, at most 700 g/mol, at most 600 g/mol, at most 500 g/mol, at most 400 g/mol, at most 380 g/mol, or at most 360 g/mol; and/or
- at least 40 g/mol, at least 45 g/mol, or at least 50 g/mol.

When the functional moiety **Z** is not a moiety Z6 derived from a sugar acid polymer or copolymer, the functional moiety **Z** in R₂ preferably has a formula weight of from 40 g/mol to 1000 g/mol, from 45 g/mol to 800 g/mol, from 45 g/mol to 600 g/mol, from 50 g/mol to 500 g/mol, from 50 g/mol to 400 g/mol or from 50 g/mol to 380 g/mol.

Non-limiting examples of functional moieties **Z** suitable in the present invention include:
1. a tri- C2⁺ alkyl moiety [ moiety **Z1** ] which forms a quaternary ammonium halide salt with the nitrogen atom of R₂;
2. a tri-methyl moiety [ moiety **Z2** ] which forms a quaternary ammonium halide salt with the nitrogen atom of R₂;
3. an alkyl carbonyl moiety [ moiety **Z3** ];
4. a carboxylic acid moiety [ moiety **Z4** ];
5. an aromatic sulfonate moiety [ moiety **Z5** ];
6. a sugar acid moiety [ moiety **Z6** ];
7. a zwitterionic moiety [ moiety **Z7** ];
8. a haloalkyl carbonyl moiety [ moiety **Z8** ];
9. a hydroxyl moiety [ moiety **Z9** ];
10. a multifunctional moiety [ moiety **Z10** ] comprising two or more complementary functional moieties; or
11. any combination of two or more moieties **Z1** to **Z10.**

The tri- C2⁺ alkyl moiety **Z1** is a tri-alkyl moiety which contains three alkyl groups containing at least 2 carbon atoms (C2⁺), in which the alkyl groups in **Z1** are preferably the same and may be linear or cyclic. The tri- C2⁺ alkyl moiety **Z1** is preferably a tri-C2-C12 alkyl moiety which contains three alkyl groups containing 2 to 12 carbon atoms, in which the alkyl groups in **Z1** are preferably the same and may be linear or cyclic. The moiety **Z1** forms a quaternary ammonium halide salt with the nitrogen atom of R₂. The moiety **Z1** may contain three cycloalkyl groups, each which is bound to the nitrogen atom of R₂, and has the formula: -(C_{y}H_{2y-1})₃ in which y being an integer from 3 to 12, preferably y being 5 or 6. The moiety **Z1** may contain three linear C2-C12 alkyl groups, each which is bound to the nitrogen atom of R₂, and may be of formula: - (CₙH₂ₙ₊₁)₃ in which n is an integer of from 2 to 12, or from 3 to 10, or from 4 to 10, or from 5 to 9, or preferably n being 6. The moiety **Z1** is preferably of formula: -(C₆H₁₃)₃ **(Z1'**) or -(C₆H₁₁)₃ **(Z1"**)_{.} In such instance, R₂ is - (CH₂)ₚ-N⁺**Z1**X⁻, with p being selected from 1 to 5, p preferably being 2, with X being selected from Br, I or Cl, and with the moiety **Z1** being coupled to the nitrogen atom in R₂ to form a quaternary ammonium halide group. In preferred embodiments in which **Z** is moiety **Z1'** or **Z1"**, R₂ is preferably of formula: -(CH₂)₂-N⁺(C₆H₁₃)₃X⁻ or -(CH₂)₂-N⁺(C₆H₁₁)₃X⁻, X being an halide selected from Br, I or Cl, X preferably being Cl.

The trimethyl moiety **Z2** is of the formula: - (CH₂)₃. In such instance, R₂ is of formula -(CH₂)ₚ-N⁺X**Z2**⁻, with p being selected from 1 to 5, p preferably being 2, with X being Br, I or Cl, and with the trimethyl moiety **Z2** being coupled to the nitrogen atom in R₂ to form a quaternary ammonium halide group. R₂ is preferably -(CH₂)₂-N⁺(CH₂)₃X⁻, X being an halide selected from Br, I or Cl, X preferably being Cl.

The alkyl carbonyl moiety **Z3** may contain a C2-C12 linear and/or cyclic alkyl group. The alkyl carbonyl moiety **Z3** containing a C2-C12 linear alkyl group may be of the formula: -C(O)-(CH₂)ₙ-CH₃ in which n is an integer of from 2 to 11, or from 3 to 10, or from 4 to 10, or from 5 to 9, or preferably n = 6. The alkyl carbonyl moiety **Z3** containing a C3-C12 cyclic alkyl group may be of the formula: -C(O)-(C_{y}H_{2y-2})_{n'}-CH₃ with y being an integer from 3 to 12, preferably y being 5 or 6, and n' being an integer of from 1 to 5, n' preferably being 1 or 2. The alkyl carbonyl moiety **Z3** is preferably of formula : -C(O)-(CH₂)₆-CH₃ (**Z3'**) or -C(O)-(C₆H₄)-CH₃ (**Z3"**). R₂ is then of formula: -(CH₂)ₚ-NR_{c}**Z3**, with p being selected from 1 to 5, p being preferably 2, with Rc being independently a C1-C6 alkyl or H, Rc being preferably H, and with the carbonyl moiety **Z3** being coupled to the nitrogen atom in R₂. In preferred embodiments in which **Z** is moiety **Z3'** or **Z3",** R₂ is preferably of formula: -(CH₂)₂-NH-C(O)-(CH₂)₆-CH₃ or -(CH₂)₂-NH-C(O)-(C₆H₄)-CH₃.

The carboxylic acid moiety **Z4** may contain a monocarboxylic acid or a dicarboxylic acid, particularly an imido dicarboxylic acid. The carboxylic acid moiety **Z4** may include at least one non-cyclic alkylene linking group bridging the carbonyl group and at least one carboxylic acid and/ a cycloalkylene linking group bridging the carbonyl and at least one carboxylic acid. The carboxylic acid moiety **Z4** may be of any of the following formulae: -C(O)-(CH₂)ₙ-COOH, -C(O)-(C_{y}H_{2y-2})_{w+1}-COOH, or -C(O)-(CH₂)ₙ-N [(CH₂)_{w}-COOH]₂, with n being an integer of from 1 to 8, from 1 to 7, from 1 to 6, from 1 to 5, or from 1 to 3, or preferably n being 2; with w being 0 or an integer from 1 to 5, or being 0, 1, 2, or 3, or w preferably being 0 or 1; and with y being an integer from 3 to 12, y preferably being 5 or 6. The carboxylic acid moiety Z4 is preferably of any of the following formulae: -C(O)-(CH₂)₂-COOH, -C(O)-(CH₂)₂-N [(CH₂)_{w}COOH]₂, or -C(O)-(C_{y}H_{2y-2})_{w+1}-COOH, with w being 0 or 1 and y being 5 or 6. R₂ is then represented by - (CH₂)ₚ-NR_{c}**Z4**, with p being selected from 1 to 5, p being preferably 2, with Rc being independently a C1-C6 alkyl or H, Rc being preferably H, and with the carboxylic acid moiety **Z4** being coupled to the nitrogen atom in R₂. In preferred embodiments in which **Z** is moiety **Z4,** R₂ is preferably represented by any of the following formulae:

-(CH₂)₂-NH-C(O)-(CH₂)₂-COOH,

-(CH₂)₂-NH-C(O)-(C_{y}H_{2y-2})-COOH

with y being 5 or 6,

-(CH₂)₂-NH-C(O)-(CH₂)₂-N-(COOH)₂,

or

-(CH₂)₂-NH-C(O)-(CH₂)₂-N (CH₂-COOH)₂.

The aromatic sulfonate moiety **Z5** may be of the formula: -C(O)-Ar-SO₃M, in which **Ar** is an aromatic ring which may be unsubstituted (meaning of formula -C₆H₄-) or substituted by one to four C1-C5 alkyl groups; and **M** is an alkali metal, such as K or Na. The aromatic sulfonate moiety **Z5** is preferably of formula: -C(O)-C₆H₄-SO₃M (**Z5'**). In such instance, R₂ is -(CH₂)ₚ-NR_{c}**Z5**, with p being selected from 1 to 5, p being preferably 2, with Rc being independently a C1-C6 alkyl or H, Rc being preferably H, and with the aromatic sulfonate moiety **Z5,** preferably **Z5',** being coupled to the nitrogen atom in R₂. In preferred embodiments in which **Z** is moiety **Z5',** R₂ is as follows:

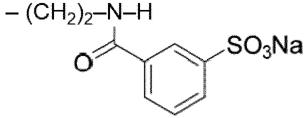

The sugar acid moiety **Z6** may be derived from a sugar acid which is a carbohydrate acid with a carboxyl group and more than one hydroxyl group. The sugar acid moiety **Z6** may be derived from a sugar acid selected from (but not limited to) uronic or alduronic acids (e.g., glucuronic acid, galacturonic acid, mannuronic acid, alluronic acid, iduronic acid, guluronic acid), gluconic acid (stereoisomer of 2,3,4,5,6-pentahydroxy hexanoic acid), glyceric acid, N-glycolylneuraminic acid, hexenuronic acid, isosaccharrininc acid, lactobionic acid, threonic acid, xylonic acid, lyxonic acid; any polymer or copolymer made from one or more of these acids; any alkali metal salt of these acids; or any combination thereof. In some embodiments when the sugar acid moiety **Z6** is derived from a polymer or copolymer made from at least one of these sugar acids, the moiety **Z6** may be derived from a poly(urionic acid) or poly(alduronic acid), in particular from alginic acid which is a polysaccharide made from mannuronic acid and guluronic acid, or its corresponding alginate salt.

The sugar acid moiety **Z6,** when it is not derived from a polysaccharide, may have a formula weight of at most 500 g/mol, at most 400 g/mol, at most 380 g/mol or at most 360 g/mol. The sugar acid moiety **Z6,** when it is not derived from a polysaccharide, may have a formula weight of at least 100 g/mol.

The sugar acid moiety **Z6,** when derived from a polymer or copolymer made from at least one of these sugar acids, may have a molecular weight (Mn) of at most 700,000 g/mol, at most 600,000 g/mol, at most 500,000 g/mol or at most 400,000 g/mol, and/or at least 1,000 g/mol, at least 2,000 g/mol, at least 3,000 g/mol, at least 5,000 g/mol, or at least 10,000 g/mol.

The sugar acid moiety **Z6** is preferably derived from glucuronic acid and is of the formula: 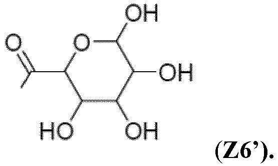 In such instance, R₂ is - (CH₂)ₚ-NR_{c}**Z6**, with p being selected from 1 to 5, p being preferably 2, with Rc being independently a C1-C6 alkyl or H, Rc being preferably H, and with the sugar acid moiety **Z6,** preferably moiety **Z6',** being coupled to the nitrogen atom in R₂. In preferred embodiments in which **Z** is moiety **Z6',** R₂ is preferably as follows, with p being selected from 1 to 5, p preferably being 2:

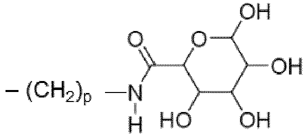

The zwitterionic moiety **Z7** is preferably derived from a betaine (meth)acrylate [ B(m)A ]. The B(m)A zwitterionic moiety **Z7** may be represented by any of the following formulae (**Z7a**) to (**Z7d**): 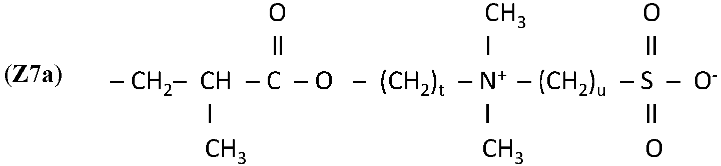 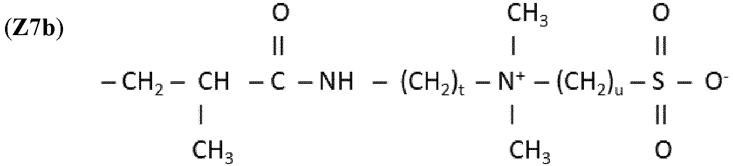 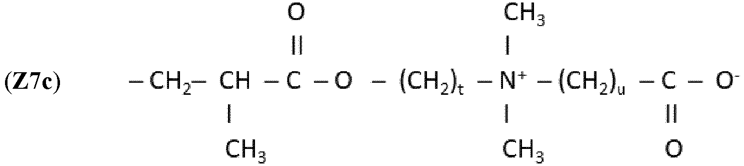 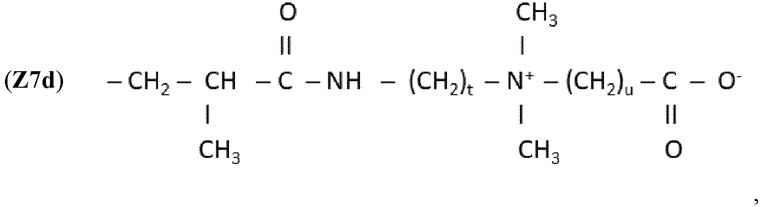 wherein
- **t** in the alkylene chain -(CH₂)ₜ- is an integer from 1 to 20, preferably t = 2; and
- **u** in the alkylene chain -(CH₂)ᵤ- is an integer from 1 to 20, preferably t = 1, 3, or 5, more preferably t = 3.

The B(m)A zwitterionic moiety **Z7** is preferably represented by the formula (**Z7a**) or (**Z7c**).

The B(m)A zwitterionic moiety **Z7** is more preferably represented by the following formula (**Z7a'**) and/or (**Z7c'**):

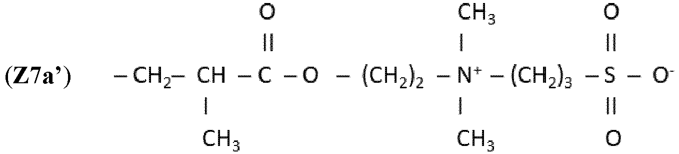

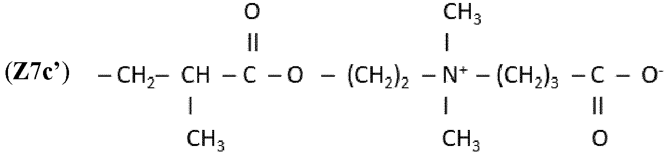

The B(m)A zwitterionic moiety **Z7** is yet more preferably represented by the formula (**Z7a'**).

In such instance, R₂ is - (CH₂)ₚ-NR_{c}**Z7**, with p being selected from 1 to 5, p being preferably 2, with Rc being independently a C1-C6 alkyl or H, Rc being preferably H, and with a B(m)A zwitterionic moiety **Z7,** preferably being moiety (**Z7a'**) and/or (**Z7c'**), more preferably being moiety (**Z7a'**), which is coupled to the nitrogen atom in R₂.

R₂ is preferably 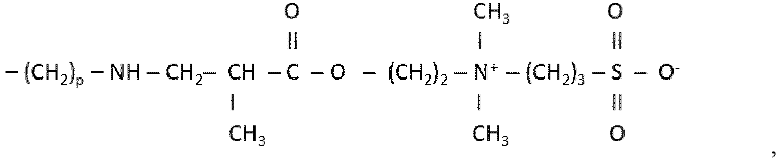 with p being selected from 1 to 5, p being preferably 2.

A preferred functional moiety **Z7** is derived from [2-(Methacryloyloxy)ethyl]dimethyl-(3-sulfopropyl)ammonium hydroxide (DMAPS).

The haloalkyl carbonyl moiety **Z8** is preferably of formula: -C(O)- (CH₂)_{w}X, in which X is an halide selected from Br, I or Cl, X preferably being Cl, and with w being selected from 1 to 5, w being preferably 1. The haloalkyl carbonyl moiety **Z8** is preferably of the formula: -C(O)-CH₂Cl (**Z8'**). In such instance, R₂ is - (CH₂)ₚ-NR_{c}**Z8**, with p being selected from 1 to 5, p being preferably 2, with Rc being independently a C1-C6 alkyl or H, Rc being preferably H, and with the haloalkyl carbonyl moiety **Z8,** preferably the chloroacetyl moiety **Z8',** which is coupled to the nitrogen atom in R₂. In preferred embodiments in which **Z8** is chloroacetyl moiety **Z8',** R₂ in the formulae (G'_{Q1}), (G'_{Q2}), (G'_{Q3}), (G'_{Q4}), (G'_{Q5}), (G'_{Q6}) is preferably -(CH₂)₂-NH-C(O)-CH₂Cl.

The hydroxyl moiety **Z9** may be a linear or cyclic alcohol or polyol derived from an aliphatic or cycloaliphatic alcohol containing an epoxy ring. The hydroxyl moiety **Z9** is preferably derived from glycidol, 7-oxabicyclo[4.1.0]heptan-2-ol, or 2-oxiraneethanol. The hydroxyl moiety **Z9** is more preferably a polyol of formula: 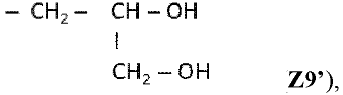 derived from glycidol.
In such instance, R₂ is - (CH₂)ₚ-NR_{c}**Z9**, with p being selected from 1 to 5, p being preferably 2, with Rc being independently a C1-C6 alkyl or H, Rc being preferably H, and with the hydroxyl moiety **Z9,** preferably moiety **Z9',** which is coupled to the nitrogen atom in R₂. In preferred embodiments, R₂ is of formula:

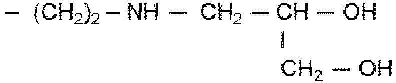

The multifunctional moiety **Z10** comprises two or more complementary functional moieties. The term "complementary functional moieties" means that these moieties are chemically compatible with each other as these moieties do not react with each other. For example, olefinic and carboxylic acid moieties are chemically compatible. The multifunctional moiety **Z10** is preferably originating from a single functionalization compound Z*. For example, the multifunctional moiety **Z10** in R₂ preferably has a combination of carboxylic acid and olefinic moieties. In particular embodiments, the multifunctional moiety **Z10** may be of formula : -C(O)-CH=CH-COOH (**Z10'**). In such instance, R₂ is - (CH₂)ₚ-NR_{c}**Z10**, with p being selected from 1 to 5, p being preferably 2, with Rc being independently a C1-C6 alkyl or H, Rc being preferably H, and with the multifunctional moiety **Z10,** preferably moiety **Z10',** being coupled to the nitrogen atom in R₂. In preferred embodiments in which moiety **Z** is **Z10',** R₂ is of formula: -(CH₂)₂-NH-C(O)-CH=CH-COOH.

It should be understood that the functionalized PAES copolymer (P2) may be multi-functionalized by using a single functionalization compound Z* having two or more functionalities or by using two or more functionalization compounds Z* each conferring a different functionality to the PAES copolymer (P2). In the latter case, the PAES copolymer (P2) may have two or more types of moieties **Z**, distinct from one another, selected from moieties **Z1** to **Z10** described herein and optionally the amine -NHR_{d} moiety (preferably - NH₂) described herein, wherein the selected moieties **Z** in (P2) originate from two or more functionalization compounds Z* selected from compounds **Z1*** to **Z10*** and in which the optional amine -NHR_{d} moiety (preferably - NH₂ moiety), when present in PAES copolymer (P2), originates from the aminated copolymer (P1) as this amine -NHR_{d} moiety has not reacted with the two or more selected functionalization compounds Z* during the making of PAES copolymer (P2).

The selection of one or more specific moieties **Z** in the PAES copolymer (P2) depends on the one or more desired functionalities for the intended application of the PAES copolymer (P2).

The specific functionality of the PAES copolymer (P2) conferred by the moiety **Z** present on some side chains, and optionally on some end groups, of the PAES copolymer (P2) may include at least one of the following functionalities:
F1. Hydrophobic quaternary ammonium functionality,
F2. Non-hydrophobic quaternary ammonium functionality,
F3. Hydrophobic functionality,
F4. Acidic functionality,
F5. Ion exchange functionality,
F6. Zwitterionic functionality,
F7. Biomolecule functionality,
F8. Haloalkyl functionality, particularly chloromethyl functionality,
F9. Hydroxyl functionality,
F10. Multiple functionalities (preferably originating from a single functionalization compound Z*), such as mixed carboxylic acid and allyl functionalities and optionally amine functionality (with unreacted - NHR_{d}, preferably - NH₂, moiety); or
any combination of any of these functionalities F1 to F 10 (preferably originating from two or more functionalization compounds Z*).

The tri- C2⁺ alkyl moiety **Z1** when attached to the nitrogen atom of the R₂ group provides a hydrophobic quaternary ammonium functionality F1.

The tri-methyl moiety **Z2** when attached to the nitrogen atom of the R₂ group provides a non-hydrophobic quaternary ammonium functionality F2.

The alkyl carbonyl moiety **Z3** provides a hydrophobic functionality F3.

The carboxylic acid moiety **Z4** provides an acidic functionality F4.

The aromatic sulfonate moiety **Z5** provides an ion exchange functionality F5.

The sugar acid moiety **Z6** provides a biomolecule functionality F6.

The zwitterionic moiety **Z7** provides a zwitterionic functionality F7.

The haloalkyl carbonyl moiety **Z8** provides a haloalkyl functionality F8, preferably a chloromethyl functionality F8'.

The hydroxyl moiety **Z9** provides a hydroxyl functionality F9.

The multifunctional moiety **Z10** may provide a combination of functionalities F10, originating from a single functionalization compound Z*, particularly an acidic functionality and an allyl functionality and optionally an amine functionality originating from unreacted amine moieties of the parent aminated copolymer (P1).

The multifunctional moiety may provide a combination of functionalities selected from two or more functionalities F1 to F10, described previously, originating from a plurality of functionalization compounds Z* and optionally an amine functionality originating from unreacted amine moieties of the parent aminated copolymer (P1).

The functional moiety **Z** preferably is not derived from heparin or salt thereof.

The functional moiety **Z** more preferably is not derived from any of the bioactive compounds disclosed in WO 2022/171683A1**.**

### Recurring units (R*_{P1})

The functionalized PAES copolymer (P2) may further comprise recurring units (R*_{P1}) of the formula (N), wherein
- each R₁ and i are the same as for the recurring units (R*_{P2});
- G_{N} is at least one formula selected from the group consisting of the formulae (G_{N1}), (G_{N2}), (G_{N3}), (G_{N4}), (G_{N5}) and (G_{N6}), as previously described,
wherein
- each k is an integer independently selected from 0 to 4;
- each j is an integer independently selected from 2 to 7;
- W is a bond, -C(CH₃)₂- or -SO₂-, preferably is -C(CH₃)₂- or -SO₂-, more preferably is -C(CH₃)₂-;
- R₃ is represented by the following formula: - (CH₂)ₚ-NHR_{d}, with p being selected from 1 to 5, preferably being 2, with R_{d} being independently a C1-C6 alkyl or H, R_{d} being preferably H.

Preferably R₃ is represented by any of the following formula: - (CH₂)₂-NHR_{d} or - (CH₂)ₚ-NH₂; more preferably R₃ is represented by the following formula: - (CH₂)₂-NH₂.

In some embodiments, i is zero for each R₁ of the recurring units (R*_{P1}).

In some embodiments, k is 0 and j is 3 in the recurring units (R*_{P1}).

### End-groups of copolymer (P2)

End-groups are moieties at respective ends of the copolymer chain.

The functionalized PAES copolymer (P2) of the present invention may optionally comprises at least 20 µeq of amine end-groups and/or **Z**-bound end-groups, for example at least 50 µeq of these end-groups, at least 80 µeq of these end-groups, at least 100 µeq, at least 150 µeq or even at least 200 µeq of these end-groups. The functionalized PAES copolymer (P2) may comprise less than 800 µeq of these end-groups, for example less than 600 µeq.

The functional moiety **Z** bound to some of these end-groups is preferably the same functional moiety **Z** that is bound to some side chains of the recurring units (R*_{P2}).

### Process for manufacturing the functionalized PAES copolymer (P2)

The second aspect of the present invention relates to a process for making the functionalized PAES copolymer (P2), comprising: contacting an aminated copolymer (P1) with at least one functional compound **Z*,** optionally in the presence of a coupling agent, in a solvent, to bind or couple the functional compound **Z*** to the aminated copolymer (P1) in order to make the functionalized PAES copolymer (P2) having functional moieties **Z.**

In this process, the aminated copolymer (P1) is modified into the functionalized PAES copolymer (P2), so that the coupling of the functional compound **Z*** to the side-chain amine groups in the units (R*_{P1}) and optional amine end-groups of the aminated copolymer (P1) confers a functionalization (by way of moieties **Z**) of the PAES copolymer (P2) for a specific property (binding affinity) associated with a biological mixture with which the **Z**-immobilized copolymer (P2) will come into contact. On the other end, the aminated copolymer (P1) with side-chain amine groups and optional amine end-groups does not have such property.

In instances where it is desired to retain, in the functionalized PAES copolymer (P2), some side-chain amine groups originating from the recurring units (R*_{P1}) of the formula (N) in the aminated PAES copolymer (P1), it may be advantageous to use a sub-stoichiometric molar amount of the functional compound Z* relative to the molar amount of available -NHR_{d} groups (preferably -NH₂) in the side-chain groups R₃ of the recurring units (R*_{P1}). In that way, in addition to having at least one functionality selected from F1 to F10 derived from the functional moieties **Z** selected from moieties **Z1** to **Z10,** the resulting functionalized PAES copolymer (P2) further has an amine functionality by the presence of the unreacted -NHR_{d} moieties (preferably -NH₂).

The contacting step in the process for manufacturing the functionalized PAES copolymer (P2) may be carried out at a temperature of at least 40 °C, at least 50 °C, at least 55 °C, at least 60 °C, and/or at most 95 °C, at most 90 °C, at most 85 °C, or at most 80 °C. Particularly, the temperature for the contacting step may be from 40 °C to 95 °C, or from 50 °C to 90 °C, or from 55 °C to 85 °C, or from 60 °C to 80 °C.

The contacting step may be carried out for a suitable time from 1 minutes to 24 hours, or from 5 min to 12 hours, or from 10 to 30 minutes, or from 30 to 60 minutes, to bind the functional compound (or derivative thereof) to the aminated PAES copolymer (P1). Suitable contact time may vary depending on the initial loading of the functional compound **Z*** in the solvent.

### Aminated copolymer (P1)

The aminated copolymer (P1) comprises amine-functionalized recurring units with side-chain amine groups.

In preferred embodiments, the aminated copolymer (P1) comprises:
- recurring units (R_{P1}) of the formula (M) described herein, and
- recurring units (R*_{P1}) of the formula (N) previously described.

In the formula (N), W is a bond, -C(CH₃)₂- or -SO₂-, preferably -C(CH₃)₂- or -SO₂-, more preferably -C(CH₃)₂-.

In the formula (N), R₃ is represented by the following formula: -(CH₂)ₚ-NHR_{d}, with p being selected from 1 to 5, with R_{d} being independently a C1-C6 alkyl or H, preferably represented by any of the following formula: -(CH₂)₂-NHR_{d} or -(CH₂)ₚ-NH₂, more preferably represented by the following formula: -(CH₂)₂-NH₂.

Optionally, the aminated copolymer (P1) may further comprise hydroxyl end-groups, amine end-groups and/or acid end-groups, preferably amine end-groups. The aminated PAES copolymer (P1) may optionally comprise at least 20 µeq of amine end-groups and may comprise less than 800 µeq of these end-groups.

The aminated PAES copolymer (P1) can be selected from the copolymers described in WO 2020/187684A1 and WO 2022/171683A1**.**

In some embodiments, the aminated PAES copolymer (P1) is an aminated PSU copolymer, in which the recurring units (R_{P1}) have the formula (M1), described previously; or an aminated PES copolymer, in which the recurring units (R_{P1}) have the formula (M2) described previously; or an aminated PPSU copolymer, in which the recurring units (R_{P1}) have the formula (M3) previously described.

In more preferred embodiments, the aminated PAES copolymer (P1) is a aminated PSU copolymer (P1) or a PES copolymer (P1), in which the recurring units (R_{P1}) have, respectively, the formula (M1) or (M2) previously described.

In some embodiments, the molar ratio of recurring units (R_{P1})/recurring units (R*_{P1}) in the aminated PAES copolymer (P1) is generally the same as the molar ratio of the recurring units (R_{P2})/recurring units (R*_{P2}) in the functionalized PAES copolymer (P2).

In preferred embodiments, the molar ratio of recurring units (R_{P1})/recurring units (R*_{P1}) may be at least 0.1/100, or at least 1/100, or at least 1/5, or at least 1/4, or at least 1/3, or at least 1/2, and/or at most 100/0.1, or at most 100/1, or at most 50/1, or at most 40/1, or at most 30/1, or at most 25/1, or at most 20/1. or at most 15/1. or at most 12/1. For example, the molar ratio of recurring units (R_{P1})/recurring units (R*_{P1}) may be from 1/100 to 100/1, or from 1/5 to 100/1, or from 1/3 to 50/1, or from 1/3 to 30/1 or from 1/3 to 20/1, or preferably from 1/2 to 50/1, or from 1/2 to 30/1 or from 1/2 to 20/1.

The aminated PAES copolymer (P1) may have a M_{w} of:
- at least 20 000 g/mol, at least 25 000 g/mol, at least 30 000 g/mol, at least 35 000 g/mol, at least 40 000 g/mol, at least 45 000 g/mol, at least 50 000 g/mol, at least 55 000 g/mol, at least 60 000 g/mol, at least 65 000 g/mol, or at least 70 000 g/mol, and/or
- at most 350 000 g/mol, at most 330 000 g/mol, at most 310 000 g/mol, at most 300 000 g/mol,\, or at most 290 000 g/mol.

The molecular weights (Mn, Mw) for the aminated PAES copolymer (P1) are preferably measured by a GPC method, and particularly using NMP as mobile phase and polystyrene standard. A particularly suitable method is the GPC Method 2 described in the examples section.

The aminated PAES copolymer (P1) may have a polydispersity index (=Mw/Mn) of
- at least 2, at least 2.1, or at least 2.2, and/or
- at most 6, at most 5.9, at most 5.8, at most 5.7, at most 5.6, at most 5.95, or at most 5.4.

The aminated PAES copolymer (P1) may be in the form of powder, granules or pellets, or beads or "soft" pellets before being used for the preparation of functionalized PAES copolymer (P2) or for the making of chromatography polymeric stationary material (e.g., membranes, beads, sheets) or for the making of solutions (e.g., polymeric dope solutions).

In such case of making a chromatography polymeric stationary material, the functionalized PAES copolymer (P2) can be made from the aminated PAES copolymer (P1) by contacting the aminated PAES copolymer (P1) with at least one functional compound **Z*,** either at the same time or after the chromatography polymeric stationary material is formed.

The aminated PAES copolymer (P1) may be dried to remove moisture /solvent before being used for the preparation of the functionalized PAES copolymer (P2), for the making of chromatography polymeric stationary material or for the making of polymeric solutions.

### Coupling agent

In preferred embodiments, the process for making the functionalized PAES copolymer (P2) includes using a coupling agent.

The coupling agent when used may comprise at least one compound selected from the group consisting of **EDC** (N-(3-Dimethylaminopropyl)-N'-ethylcarbodiimide hydrochloride), **NHS** (N-Hydroxy succinimide), 1-[3-(Dimethylamino)propyl]-3-ethylcarbodiimide methiodide, 1-(3-Dimethylaminopropyl)-3-ethylcarbodiimide, which is polymer-bound; HOAt (1-Hydroxy-7-azabenzotriazole), PyBOP (benzotriazol-1-yl-oxytripyrrolidinophosphonium hexafluorophosphate), and PyAOP ((7-Azabenzotriazol-1-yloxy)tripyrrolidinophosphonium hexafluorophosphate).

A preferred coupling agent is **EDC, NHS** or a combination of **EDC** and **NHS.** Both **EDC** and **NHS** are available from Sigma-Aldrich, U.S.A.

The coupling of the functional compound **Z*** to the aminated copolymer (P1) to make the functionalized PAES copolymer (P2) may be ionic and/or covalent, but preferably covalent.

### Solvent used in the process for making functionalized PAES copolymer (P2)

The solvent is preferably N-Methyl-2-pyrrolidone (NMP), N-butylpyrrolidinone (NBP), N-ethylpyrrolidone (NEP), N,N'-dimethylacetamide (DMAc), dimethylformamide (DMF), chloroform, methylene chloride, chlorobenzene, 1,3-dimethyl-2-imidazolidinone (DMI), dimethylsulfoxide (DMSO), sulfolane, or any combinations thereof.

### Dehydration of the aminated copolymer (P1) before coupling

The process for manufacturing the functionalized PAES copolymer (P2) may include first dissolving the aminated copolymer (P1) in a mixture of the solvent, optionally an acid quencher or scavenger such as tributylamine, and a co-solvent, and then the solution is subjected to azeotropic dehydration by heating it to a temperature of 130-170°C, preferably of 140-160°C, more preferably of about 145-155°C or 150°C ± 2 °C, and removing most of the co-solvent by distillation. The co-solvent which forms an azeotrope with water includes aromatic hydrocarbons such as benzene, toluene, xylene, ethylbenzene, chlorobenzene and the like. The co-solvent is preferably toluene or chlorobenzene. The azeotrope forming co-solvent and the solvent are used typically in a co-solvent/solvent weight ratio of from about 1:100 to about 1:1 or from about 1:30 to about 1:1, preferably from about 1:10 to about 1:1, more preferably from about 1:5 to about 1:1. The azeotrope-forming co-solvent, for example, chlorobenzene or toluene, is removed from the polymer solution, typically by distillation, after the water is removed leaving the aminated copolymer (P1) dissolved in the solvent.

### Functional compound Z*

The functional compound **Z*** means to include any salt thereof (e.g., sodium salt).

It should be understood that a sole functional compound Z* or two or more functional compounds Z* may be used in the making of the functionalized PAES copolymer (P2).

Without wishing to be limited by such theory, it is believed that the mechanism of attachment/binding of the functional compound **Z*** to the side-chain amine groups of the recurring units (R*_{P1}) and to the optional amine end-groups of the aminated PAES copolymer (P1) may be, for example but not limited to:
- by way of ionic binding of carboxylic acid groups present in the structure of the functional compound Z*, with the amine groups thereby creating ionic bonds between COO⁻ groups and NH₃⁺ groups, and/or
- by way of covalent binding (reacting) COO⁻ groups with NH₃⁺ groups to create -NH-CO- bonds; or
- by way of binding trialkyl groups present in the structure of the functional compound Z*, with the nitrogen atoms in the amine groups R₃ thereby creating quaternary ammonium structures.

Non-limiting examples of functional compounds **Z*** suitable in the present invention include:
1. a C2⁺ haloalkane [compound **Z1***];
2. a methyl halide [compound **Z2***];
3. an alkanoyl halide [compound **Z3***];
4. a carboxylic acid anhydride [compound **Z4*** ];
5. an aromatic sulfonic acid or sulfonate salt [compound **Z5***];
6. a sugar acid or salt thereof [compound **Z6***];
7. a betaine (meth)acrylate zwitterionic compound [compound **Z7***];
8. a haloacetyl halide [compound **Z8***];
9. a linear or cyclic alcohol or polyol [compound **Z9***];
10. maleic anhydride [compound **Z10***], or
11. any combinations of two or more thereof.

A non-limiting suitable functional compound **Z1*** may be a linear or cyclic haloalkane. In some embodiment, the functional compound **Z1*** may be a C2⁺ linear haloalkane with a straight-chain structure. **Z1*** may be of formula: X(CₙH₂ₙ₊₁) in which n is an integer of from 2 to 10, or from 3 to 10, or from 4 to 10, or from 5 to 9, preferably n being 6, and in which X is an halide selected from Br, Cl, or I. In some embodiments, the functional compound **Z1*** contains a cyclic structure. **Z1*** may be a cyclic haloalkane of the formula: X-(C_{y}H_{2y-2})_{n'}-CH₃ or X-(C_{y}H_{2y-1})_{n'} with y being an integer from 3 to 10, preferably y being 5 or 6; n' being an integer of from 1 to 5, preferably n' being 1 or 2; and X being an halide selected from Br, Cl, or I, preferably X being Cl. A preferred functional compound **Z1*** is an hexyl halide of formula: X(C₆H₁₃), in which the halide X is Br, Cl, or I, preferably X being chloride.

A non-limiting suitable functional compound **Z2*** is methyl chloride. The functional compound **Z2*** is not a functional compound **Z1***.

A non-limiting suitable functional compound **Z3*** may be an acyl chloride with a -C(O)X group, in which X is an halide. The functional compound **Z3*** may be an acyl halide with a straight-chain structure of the formula: X-C(O)-(CH₂)ₙ-CH₃ in which n is an integer of from 2 to 11, or from 3 to 10, or from 4 to 10, or from 5 to 9, or preferably n = 6, and in which X is an halide selected from Br, Cl, or I, preferably X=Cl. The functional compound **Z3*** containing a cyclic structure may be of formula: X-C(O)-(C_{y}H_{2y-2})_{n'}-CH₃ or X-C(O)-(C_{y}H_{2y-1})_{n'}, with y being an integer from 3 to 12, preferably y being 5 or 6; n' being an integer of from 1 to 5, or preferably n' being 1 or 2; and X being an halide selected from Br, Cl, or I, preferably X being Cl. Preferred functional compound **Z3*** may be of formula: X-C(O)-(CH₂)₆-CH₃ or X-**C(O)-(C₆H₄)-CH₃**, with X being an halide selected from Br, Cl, or I, preferably X being Cl. The more preferred functional compound **Z3*** is octanoyl chloride.

A non-limiting suitable functional compound **Z4*** may be a carboxylic acid anhydride, such as succinic anhydride, or a nitrilo-tricarboxylic acid such as 2,2',2"-nitrilotriacetic acid (or triglycollamic acid). In some embodiments, the functional compound **Z4*** may exclude 2,2',2"-nitrilotriacetic acid.

A non-limiting suitable functional compound **Z5*** may be a carboxy aryl sulfonic acid or sulfonate. In some embodiments, the functional compound **Z5*** may be of formula: C(O)-Ar-SO₃M with M being H or an alkali metal salt, preferably H or Na, and **Ar** being an aromatic ring which may be unsubstituted (meaning of formula -C₆H₄-) or substituted by one to four C1-C5 alkyl groups. Preferred functional compound **Z5*** may be 3-carboxybenzene sulfonic acid or sulfonate of formula: C(O)-C₆H₄-SO₃M, with M being H or an alkali metal salt, preferably H or Na.

Non-limiting suitable functional compound **Z6*** may be at least one uronic or alduronic acid (e.g., glucuronic acid, galacturonic acid, mannuronic acid, alluronic acid, iduronic acid, guluronic acid), gluconic acid (stereoisomer of 2,3,4,5,6-pentahydroxy hexanoic acid), glyceric acid, N-glycolylneuraminic acid, hexenuronic acid, isosaccharrininc acid, lactobionic acid, threonic acid, xylonic acid, lyxonic acid, or any alkali metal salt of these acids, such as glucuronate sodium salt, or any polymers made from one or more of these sugar acids. In some embodiments when the sugar acid compound **Z6*** is a polymer or copolymer made from these sugar acids, the compound **Z6*** may be a poly(urionic acid) or poly(alduronic acid), in particular may be alginic acid which is a polysaccharide made from mannuronic acid and guluronic acid, or its corresponding alginate salt.

A non-limiting suitable functional compound **Z7*** is at least one betaine (meth)acrylate, particularly a betaine sulfo(meth)acrylate and/or betaine carboxy(meth)acrylate, preferably in the form of alkali metal salt, more preferably in the form of sodium salt. The functional compound Z7* may be represented by any of the following formulae: 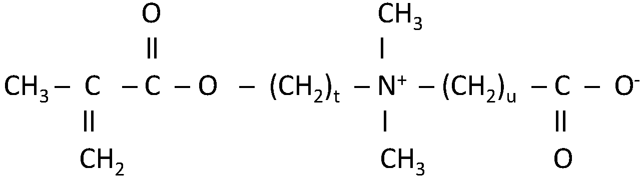 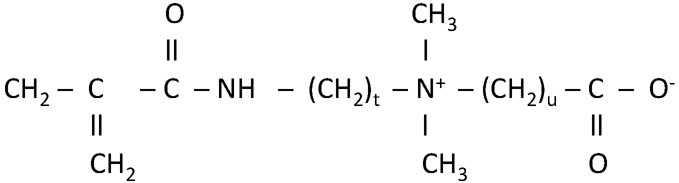 wherein
- t in the alkylene chain -(CH₂)ₜ- is an integer from 1 to 20, preferably t=2; and
- u in the alkylene chain -(CH₂)ᵤ- is an integer from 1 to 20, preferably t = 1, 3, or 5, more preferably t = 3.

A preferred functional compound **Z7*** is [2-(methacryloyloxy)ethyl]dimethyl-(3-sulfopropyl)ammonium hydroxide (DMAPS).

A non-limiting suitable functional compound **Z8*** is chloroacetyl chloride.

A non-limiting suitable functional compound **Z9*** is an alcohol or polyol. Particularly, the functional compound **Z9*** may contain both epoxide and alcohol groups such as glycidol, 7-oxabicyclo[4.1.0]heptan-2-ol, or 2-oxiraneethanol.

A non-limiting suitable functional compound **Z10*** is maleic anhydride.

The functional compound **Z*** may have a formula weight of:
- less than 3000 g/mol, at most 2500 g/mol, at most 2000 g/mol, at most 1500 g/mol, at most 1000 g/mol, at most 800 g/mol, at most 700 g/mol, at most 600 g/mol, at most 500 g/mol, at most 400 g/mol, at most 380 g/mol, or at most 360 g/mol; and/or
- at least 40 g/mol, at least 45 g/mol, or at least 50 g/mol.

The functional compound **Z*** preferably has a formula weight of from 40 g/mol to 1000 g/mol, from 45 g/mol to 800 g/mol, from 45 g/mol to 600 g/mol, from 50 g/mol to 500 g/mol, from 50 g/mol to 400 g/mol or from 50 g/mol to 380 g/mol.

In embodiment in which the functional compound **Z*** is a sugar acid polymer or copolymer previously described in relation to moiety **Z6,** the sugar acid (co)polymer when used as functional compound **Z6*** may have a molecular weight (Mn) of at most 700,000 g/mol, at most 600,000 g/mol, at most 500,000 g/mol or at most 400,000 g/mol, and/or at least 1,000 g/mol, at least 2,000 g/mol, at least 3,000 g/mol, at least 5,000 g/mol, or at least 10,000 g/mol.

The functional compound **Z*** preferably excludes any of the bioactive compounds having a large molecular weight (≥ 3000 g/mol) and being disclosed in WO 2022/171683A1 (SOLVAY SPECIALTY POLYMERS USA), incorporated herein by reference.

The functional compound **Z*** more preferably excludes at least one of the following bioactive compounds disclosed in WO 2022/171683A1**:**
- anti-thrombotic agents, such as heparin or derivative thereof (e.g., salt),
- amino acids,
- nucleic acids, such as, but not limited to, deoxyribonucleic acid (DNA), ribonucleic acid (RNA), e.g., messenger RNA (mRNA),
- hyaluronic acid or derivatives thereof,
- glucuronic acid residues,
- proteins, like collagen, keratin, enzymes, such as, but not limited to,
   ▪ lactase;
   ▪ glucanohydrolases, e.g., alpha-amylase and isoamylase;
   ▪ pectinases for pectin hydrolysis;
   ▪ enzymes for high-fructose corn syrup production;
   ▪ enzymes for debittering of fruit juices, e.g., for removing naringin (responsible for immediate bitterness) and/or limonin (responsible for "delayed bitterness");
   ▪ esterases;
   ▪ lipases;
   ▪ acylases;
   ▪ enzymes that facilitate acidolysis reactions, ester synthesis or ester interchange reactions, transesterification reactions;
   ▪ enzymes having phospholipase or protease activity, such as pepsin;
- metal-chelating and/or protease inhibitor agents, such as ethylene glycol tetraacetic acid (EGTA) and ethylenediaminetetraacetic acid (EDTA);
- acidic lipids such as prostaglandins, or
- any combinations of two or more thereof.

The functional compound **Z*** yet more preferably excludes heparin or salt thereof.

It is preferred that the functional compound **Z*** is used in a sub-stoichiometric or stoichiometric molar amount compared to the available molar amount of -NHR_{d} group (preferably -NH₂ group) on the side chains of the aminated copolymer (P1).

Because the coupling of moiety **Z** to the aminated PAES copolymer (P1) may be carried out with a sub-stoichiometric amount of the functional compound **Z*** compared to the available amount of -NHR_{d} groups (preferably -NH₂ groups) on the side chains of the aminated copolymer (P1), the resulting copolymer (P2) may further comprise recurring units (R*_{P1}) of the formula (N) originating from the aminated PAES copolymer (P1). In such instance, the copolymer (P2) further contains amine groups of formula -NHR_{d} (preferably -NH₂) on some side chains.

Should the molar amount of the functional compound **Z*** be greater than the available molar amount of -NHR_{d} groups (preferably -NH₂ groups) on the side groups R₃ of the aminated copolymer (P1), the amount of functional compound **Z*** should not exceed more than 50 mol% of the available molar amount of -NHR_{d} groups (preferably -NH₂ groups) in the aminated copolymer (P1).

### Process for preparing the aminated copolymer (P1)

The aminated PAES copolymer (P1) can be prepared by various chemical processes, notably by free radical-thermal reaction, by free radical-UV reaction, by base-catalysed reaction or by nucleophilic-catalysed reaction. Preferably, the aminated PAES copolymer (P1) is prepared in the same manner as described in WO 2020/187684A1 and WO 2022/171683A1 from an allyl/vinylene-functionalized PAES copolymer precursor (P0). The PAES copolymer precursor (P0) is functionalized with side-chain allyl/unsaturated carbon-carbon double bonds functional groups which are reactive and can therefore be used to efficiently modify the copolymers.

The PAES copolymer precursor (P0) notably comprises recurring units (R*_{P0}) with two pendant allyl/vinylene side-chains, which are reacted with a compound R₃-SH, wherein R₃ is represented by the following formula: -(CH₂)ₚ-NHR_{d}, with p being selected from 1 to 5, p preferably being 2, and with R_{d} being independently a C1-C6 alkyl or H.

Preferably, R_{d} in R₃ is H, and R₃ is represented by the following formula: -(CH₂)ₚ-NH₂; or p in R₃ is 1 or 2, and R₃ is represented by the following formula: -(CH₂)₂-NHR_{d}.

More preferably, R_{d} in R₃ is H, p in R₃ is 2, and R₃ is preferably represented by the following formula: -(CH₂)₂-NH₂.

The amination of the allyl/vinylene-modified PAES copolymer precursor (P0) to form the aminated copolymer (P1) may be carried out at a temperate from 20 °C to 90 °C or from 40 °C to 80 °C, or from 50 °C to 70 °C.

The allyl/vinylene-modified PAES copolymer precursor (P0) more precisely comprises:
- recurring units (R_{P0}) of the formula (M) previously described, and
- recurring units (R*_{P0}) of formula (P): 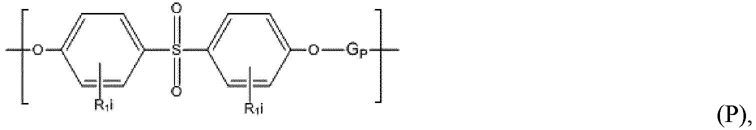
   - optionally at least 20 µeq of reactive end-groups,
wherein
- each R₁, i and T are defined in the same manner as for recurring units (R_{P2});
- **G_{P}** is selected from the group consisting of at least one of the following formulae (GP₁), (GP₂), (GP₃): 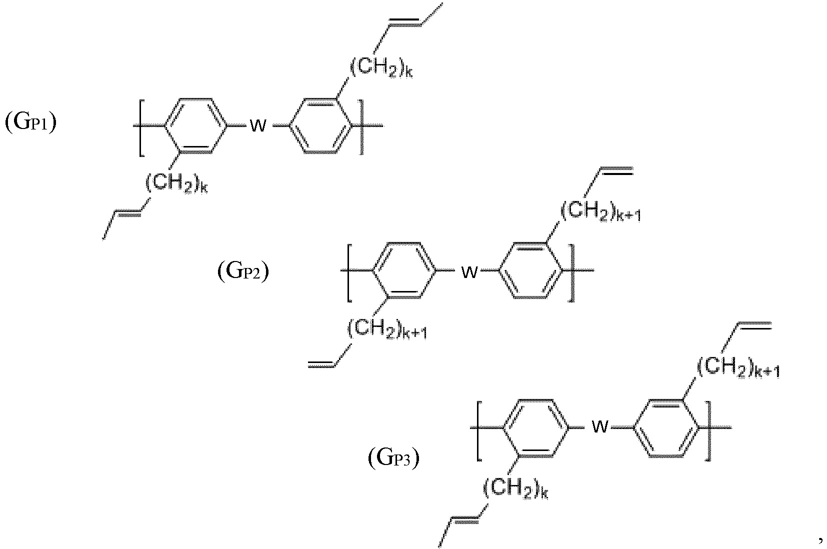
- each k is an integer independently selected from 0 to 4; and
- W is a bond, -C(CH₃)₂- or -SO₂-, preferably -C(CH₃)₂- or -SO₂-, more preferably -C(CH₃)₂-.

In some embodiments, the PAES copolymer precursor (P0) is such that T in recurring units (R_{P0}) is selected from the group consisting of a bond, -SO₂-, -C(CH₃)₂- and any combination thereof. The PAES copolymer precursor (P0) may, for example, comprise recurring units (R_{P0}) in which T is -C(CH₃)₂- and recurring units (R_{P0}) in which T is -SO₂.

Because the ethylenic unsaturations are on the side chains of recurring units (R*_{P0}) of copolymer precursor (P0), consequently the aminated PAES copolymer (P1) obtained from copolymer precursor (P0) will contain amine groups in its side chains of the recurring units (R*_{P1}), and the functionalized PAES copolymer (P2) obtained from copolymer (P1) will contain **Z**-functionalized groups in its side chains of the recurring units (R*_{P2}).

In some embodiments, the PAES copolymer precursor (P0) is an allyl/vinylene-modified PSU, PES, or PPSU copolymer, in which the recurring units (R_{PO}) have at least one formula selected from the formulae (M1), (M2) or (M3) previously described.

In some embodiments, the molar ratio of recurring units (R_{P0})/recurring units (R*_{P0}) in copolymer precursor (P0) is generally the same as the molar ratio of recurring units (R_{P2})/recurring units (R*_{P2}) of the functionalized PAES copolymer (P2). In preferred embodiments, the molar ratio of recurring units (R_{P0})/recurring units (R*_{P0}) may be at least 0.1/100, or at least 1/100, or at least 1/5, or at least 1/4, or at least 1/3, or at least 1/2, and/or at most 100/0.1, or at most 100/1, or at most 50/1, or at most 40/1, or at most 30/1, or at most 25/1, or at most 20/1. or at most 15/1. or at most 12/1. For example, the molar ratio of recurring units (R_{P0})/recurring units (R*_{P0}) may be from 1/100 to 100/1, or from 1/5 to 100/1, or from 1/3 to 50/1, or from 1/3 to 30/1 or from 1/3 to 20/1, or preferably from 1/2 to 50/1, or from 1/2 to 30/1 or from 1/2 to 20/1.

The PAES copolymer precursor (P0) may preferably comprise collectively at least 50 mol.%, or at least 60 mol.%, or at least 70 mol.%, at least 80 mol.%, or at least 90 mol.%, or at least 95 mol.%, or at least 99 mol.% of recurring units (R_{P0}) and (R*_{P0}), based on the total number of moles of recurring units in copolymer precursor (P0). The PAES copolymer precursor (P0) may even preferably consists essentially of recurring units (R_{P0}) and (R*_{P0}).

In addition to the allyl/vinylene side-chains, the PAES copolymer precursor (P0) may further comprise reactive end-groups. These reactive end-groups may comprise hydroxyl end-groups, amine end-groups and/or acid end-groups, preferably amine end-groups. The PAES copolymer precursor (P0) may optionally comprise at least 20 µeq of these reactive end-groups and/or less than 800 µeq of these reactive end-groups.

### Process for preparing the copolymer precursor (P0)

The allyl/vinylene-functionalized copolymer precursor (P0) is generally prepared by condensation of at least one aromatic dihydroxy monomer (a1), with at least one aromatic sulfone monomer (a2) comprising at least two halogen substituents and at least one allyl-substituted aromatic dihydroxy monomer (a3). Preferably, the allyl/vinylene-functionalized copolymer precursor (P0) is prepared in the same manner as described in WO 2020/187684A1 and WO 2022/171683A1 and the condensation conditions described in WO'684 and WO'683 are applicable here.

In particular, the condensation to prepare copolymer precursor (P0) is preferably carried out in a solvent (preferably sulfolane or NMP), in the presence of a base, with molar ratio (a1)+(a3)/(a2) preferably from 0.9 to 1.1, for example from 0.92 to 1.08 or from 0.95 to 1.05. The temperature for the condensation reaction to prepare copolymer precursor (P0) is kept at about 150°C to about 350°C, preferably from about 210°C to about 300°C for about one to 15 hours.

In preferred embodiments, the monomer (a1) consists essentially of biphenol, or bisphenol A, or bisphenol S, or any combination thereof; the monomer (a2) consists essentially of DCDPS; and the monomer (a3) consists of 2,2'-diallylbisphenol A (daBPA), 2,2'-diallylbisphenol S (daBPS) and/or 2,2'-diallylbiphenol (daBP), preferably daBPA and/or daBPS, more preferably daBPA.

### Chromatography polymeric stationary material

Another aspect of the present invention provides a chromatography polymeric stationary material comprising, or made from, the functionalized PAES copolymer (P2) according to the present invention.

A chromatography polymeric stationary material comprising, or made from, the functionalized PAES copolymer (P2) may a solid article selected from 3-D articles such as functionalized membranes, beads, powder and/or capillary tubes, or 2-D articles such as films, plates and/or sheets.

The functionalized PAES copolymer (P2) can be incorporated into a chromatography polymeric stationary material having a polymeric surface. The chromatography polymeric stationary material can have a polymeric surface, at least a portion of which comes into direct contact with a biological fluid (such as a complex biological mixture) in its intended application setting. The polymeric surface may be an external or internal surface of the chromatography polymeric stationary material. For example, a chromatography membrane has a polymeric surface intended to come into direct contact with a biological fluid. A person of ordinary skill in the art will know which surface is intended to contact a biological fluid based upon the intended application setting of the chromatography polymeric stationary material.

In some embodiments, a surface of the chromatography polymeric stationary material (e.g., chromatography membrane or beads) can comprise the functionalized PAES copolymer (P2). For example, the functionalized PAES copolymer (P2) can form a portion of an external surface of the chromatography polymeric stationary material, or the functionalized PAES copolymer (P2) can form all, or substantially all, of the chromatography polymeric stationary material.

As another example, a surface of the chromatography polymeric stationary material can comprise a coating or film comprising, or made from, the functionalized PAES copolymer (P2) , disposed on an underlying substrate. In such embodiments, the underlying substrate can be a structural component having a composition distinct from the functionalized PAES copolymer (P2).

In embodiments in which the functionalized PAES copolymer (P2) is in a film or coating of the chromatography polymeric stationary material (e.g., membrane or beads), the film or coating may have an average thickness of from about 25 µm to about 1 mm.

The chromatography polymeric stationary material may further comprise at least one polymer distinct from the functionalized PAES copolymer (P2) described herein. For example the chromatography polymeric stationary material may further comprise at least one polymer selected from the group consisting of the aminated PAES copolymer (P1), another sulfone polymer, e.g., polysulfone (PSU), polyethersulfone (PES), poly(biphenyl ether sulfone) (PPSU), a polyphenylene sulfide (PPS), a poly(aryl ether ketone) (PAEK), e.g. a poly(ether ether ketone) (PEEK), a poly(ether ketone ketone) (PEKK), a poly(ether ketone) (PEK) or a copolymer of PEEK and poly(diphenyl ether ketone) (PEEK-PEDEK copolymer), a polylactide (PLA), a polyetherimide (PEI), a polycarbonate (PC), a polyphenylene oxide (PPO), polyvinylpyrrolidone (PVP) and/or polyethylene glycol (PEG).

In some embodiments, the chromatography polymeric stationary material may further comprise at least another sulfone polymer distinct from the functionalized PAES copolymer (P2), e.g., may comprise at least one polymer selected from the group consisting of the aminated PAES copolymer (P1), PSU, PES, PPSU, PC, PPO, PEI, PLA, PVP and/or PEG, said PEG preferably having a molecular weight of at least 200.

The chromatography polymeric stationary material may comprise the functionalized PAES copolymer (P2) of the present invention in an amount of at least 1 wt. %, at least 2 wt. %, at least 3 wt. %, at least 4 wt. %, at least 5 wt. %, at least 6 wt. %, or at least 7 wt. %, or at least 8 wt. %, based on the total weight of the polymers in the chromatography polymeric stationary material, and/or may comprise the functionalized PAES copolymer (P2) of the present invention in an amount of more than 50 wt. %, for example more than 55 wt. %, more than 60 wt. %, more than 65 wt. %, more than 70 wt. %, more than 75 wt. %, more than 80 wt. %, more than 85 wt. %, more than 90 wt. %, more than 92 wt. %, or more than 95 wt. %, based on the total weight of the polymers in the chromatography polymeric stationary material.

According to an embodiment, the chromatography polymeric stationary material may comprise the functionalized PAES copolymer (P2) and optionally another sulfone polymer distinct from the functionalized PAES copolymer (P2), e.g., the aminated PAES copolymer (P1), PSU, PES, PPSU described herein, in an amount ranging from 1 to 99 wt. %, for example from 2 to 98 wt. %, from 3 to 97 wt. % or from 4 to 96 wt. %, based on the total weight of polymers in the chromatography polymeric stationary material.

The chromatography polymeric stationary material may further comprise at least one non-polymeric ingredient such as a solvent, a filler, a lubricant, a mold release, an antistatic agent, a flame retardant, an anti-fogging agent, a matting agent, a pigment, a dye and/or an optical brightener.

### Membrane or beads

A particular embodiment of the polymeric stationary material relates to a functionalized membrane or bead comprising, or made from, the functionalized PAES copolymer (P2).

Any of the embodiments related to optional components in the chromatography polymeric stationary material, such as polymer(s) distinct from the functionalized PAES copolymer (P2) (e.g., another sulfone polymer) and non-polymeric ingredient(s), are equally applicable for the functionalized membrane or bead.

In some embodiment when the chromatography polymeric stationary material is in form of functionalized beads or membrane, the functionalized PAES copolymer (P2) can be included in at least a portion of a surface of the chromatography beads or membrane for example in the form of a coating of the copolymer (P2) onto a surface of a substrate (e.g., a porous particle or tube), when it is intended for such surface to come in contact with a biological fluid. Alternatively, the functionalized PAES copolymer (P2) can form all, or substantially all, of the chromatography membrane or beads.

From an architectural perspective, chromatography membranes comprising, or made from, the functionalized PAES copolymer (P2) may be provided under the form of flat structures (e.g. films or sheets), corrugated structures (such as corrugated sheets), tubular structures, or hollow fibers.

A chromatography membrane comprising, or made from, the functionalized PAES copolymer (P2) may be two-dimensional in the form of films, plates or sheets.

A membrane may be formed using a plurality of films, plates or sheets.

Further, a chromatography membrane comprising, or made from, the functionalized PAES copolymer (P2) is preferably three-dimensional.

Membranes can be in the form of tubes.

Tubular membranes are classified based on their dimensions in tubular membranes having a diameter greater than 3 mm; capillary membranes, having a diameter comprised between 0.5 mm and 3 mm; and hollow fibers having a diameter of less than 0.5 mm. Capillary membranes are otherwise referred to as hollow fibers. Hollow fibers are particularly advantageous in applications where compact modules with high surface areas are required.

According to the present invention, the functionalized membrane or bead is typically porous and may be characterized by its average pore diameter and porosity, i.e., the fraction of the total membrane that is porous.

As per the pore size is concerned, full range of porous chromatography membranes or beads can be advantageously manufactured with the functionalized PAES copolymer (P2) or at the same time as the aminated PAES copolymer (P1) is modified to copolymer (P2). The pore distribution can be isotropic or anisotropic.

In particular, a porous functionalized membrane may have a gravimetric porosity (%) of 20 to 90 % and comprises pores, wherein at least 90 % by volume of the said pores has an average pore diameter of less than 5 µm. Gravimetric porosity of the membrane is defined as the volume of the pores divided by the total volume of the membrane.

Membranes having a uniform structure throughout their thickness are generally known as symmetrical membranes; membranes having pores which are not homogeneously distributed throughout their thickness are generally known as asymmetric membranes. Asymmetric membranes are characterized by a thin selective layer (0.1-1 µm thick) and a highly porous thick layer (100-200 µm thick) which acts as a support and has little effect on the separation characteristics of the membrane.

The membrane according to the present invention can be manufactured using any of the conventionally known membrane preparation methods, for example, by a solution casting or solution spinning method.

The beads according to the present invention can be manufactured using any of the conventionally known bead preparation methods, for example, by a solution casting method.

The membrane or bead according to the present invention may be prepared by a phase inversion method occurring in a liquid phase, said method comprising the following steps:
(i) preparing a polymer solution comprising the aminated PAES copolymer (P1) or functionalized copolymer (P2) described herein and a polar solvent,
(ii) processing said polymer solution into a membrane or bead; and
(iii) contacting said membrane or bead with a non-solvent bath.

### Use of the functionalized PAES copolymer (P2)

Another aspect of the present invention provides the use of the functionalized PAES copolymer (P2) for preparing the chromatography polymeric stationary material of the present invention or a part thereof.

### Method for preparing a chromatography polymeric stationary material

Another aspect of the present invention provides a method for preparing the chromatography polymeric stationary material described herein which comprises the functionalized PAES copolymer (P2) of the present invention.

Such method may be carried out in different ways. For example, the method may comprise performing one of the following:
- method a) (based on a homogenous single phase system): using the functionalized PAES copolymer (P2) in forming a chromatography polymeric stationary material; or
- method b) (based on a heterogeneous biphase system): contacting the aminated copolymer (P1) with at least one functional compound Z* to make the functionalized PAES copolymer (P2) while at the same time forming the chromatography polymeric stationary material; or
- method c) (based on a heterogeneous biphase system) : contacting a pre-formed chromatography polymeric stationary material comprising the aminated copolymer (P1) with at least one functional compound Z* to make the functionalized PAES copolymer (P2),
wherein the aminated polymer (P1) comprises the recurring units (R_{P1}) of the formula (M), and the functionalized recurring units (R*_{P1}) of the formula (N), described herein.

The method a) employs an homogenous single-phase system, whereas the methods b) and c) employs an heterogeneous biphase system.

The method (b) may be called an *in-situ* method, while the method (c) may be called an *ex-situ* method.

The contacting step in method a) or b) may be carried out, optionally in the presence of a coupling agent, in a solvent, to bind or couple the at least one functional compound **Z*** to the aminated copolymer (P1) in order to make the functionalized PAES copolymer (P2) having functional moieties **Z** according to the invention.

In some embodiments, particularly when the chromatography polymeric stationary material is a membrane, bead, sheet or a part thereof, the method preferably includes a phase inversion occurring in a liquid phase (e.g., precipitation bath) to form the membrane or part thereof.

The contacting step in the method (b) or method (c) may be carried out, optionally in the presence of a coupling agent, in a solvent, to bind the functional compound **Z*** to the aminated PAES copolymer (P1) to make the functionalized PAES copolymer (P2).

In some embodiments of the method (a), the chromatography polymeric stationary material (e.g., membrane or beads) may be formed from a polymeric dope solution comprising, or made from, the functionalized PAES copolymer (P2).

In some embodiments of the method (b), the chromatography polymeric stationary material may be made using the aminated PAES copolymer (P1), the functional compound **Z*,** and optionally the coupling agent, in an acidic aqueous solvent, in order to make *in-situ* the functionalized PAES copolymer (P2) at the same time as the chromatography polymeric stationary material is being formed in order for the functional compound **Z*** to be coupled to the amine side chains and optional amine end-groups of the aminated PAES copolymer (P1), in order to attach the functional moieties **Z** to the nitrogen atoms of the side chains of **(P1)** and thus provide *in-situ* the functionalized PAES copolymer (P2) in the form of the chromatography polymeric stationary material.

In some embodiments of the method (c), a porous chromatography polymeric stationary material may be first pre-formed using the aminated PAES copolymer (P1), and after being pre-formed into a shape, the porous pre-formed chromatography polymeric stationary material is placed in contact with the functional compound **Z*,** and optionally the coupling agent, in a solvent, in order for the functional compound **Z*** to be coupled to the amine side chains and optional amine end-groups of the aminated PAES copolymer (P1), in order to bind or couple the functional moieties **Z** to the nitrogen atoms of the side chains of **(P1)** and thus to provide *ex-situ* the functionalized PAES copolymer (P2), particularly on the internal and external surface(s) of the porous chromatography polymeric stationary material, the internal surface being defined as the internal surface of the pores.

In yet other embodiments of the method for preparing a chromatography polymeric stationary material (e.g., membrane or beads) comprising, or made from, the functionalized PAES copolymer (P2), the immobilisation of at least one functional compound **Z*** may be carried in two (consecutive) steps in a method (d):
1/ immobilisation of at least one (first) functional compound **Z*** onto the copolymer (P1) to make the copolymer (P2) before or while forming the chromatography polymeric stationary material; and
2/ immobilisation of at least a (second) functional compound **Z*** - same or different as the functional compound **Z*** used in step 1/ - onto the functionalized PAES copolymer (P2) now present in the chromatography polymeric stationary material to form another copolymer (P2').

Preferably, at least a same functional compound **Z*** is used in these two immobilisation steps 1/ and 2/.

In alternate embodiments, the functional compounds **Z*** used in these two immobilisation steps 1/ and 2/ are different so as to confer two different functionalities to the copolymer (P2').

Preferably, the immobilisation step 1/ in method (d) is done with a sub-stoichiometric molar amount of the (first) functional compound **Z*** relative to the molar amount of amine groups (in side chains and/or end-groups) of the copolymer (P1) so as to retain some 'unbound' or 'free' amine groups in (P1) side chains, which then can serve as binding or coupling sites for the (second) functional compound **Z*** used in the immobilisation step 2/.

The difference between copolymers (P2) and (P2') is the amount of functional compound **Z*** bound to the copolymer structure and the amount of amine groups remaining in the copolymer structure.

In some instances of method (d), the immobilisation step 1/ may be carried out to ionically bind a (first) functional compound **Z_{A}***, while the immobilisation step 2/ may be carried out to covalently bind a (second) functional compound **Z_{B}*** - same or different as the functional compound **Z_{A}*** used in step 1/, or vice versa.

Yet in other instances of method (d), the immobilisation step 1/ may be carried out before or while forming the chromatography polymeric stationary material (e.g., membrane or beads) with a coupling agent in order to covalently bind a (first) functional compound Z**_{A}*** onto copolymer (P1) to make copolymer (P2), while the immobilisation step 2/ may be carried out, after forming the chromatography polymeric stationary material, without a coupling agent in order to ionically bind a (second) functional compound **Z_{B}*** (same or different as first functional compound **Z_{A}*** in the immobilisation step 2/) onto the functionalized PAES copolymer (P2) to make a copolymer (P2').

Various embodiments of the method for making the chromatography polymeric stationary material described herein (e.g., methods (a), (b), (c), (d)) are equally applicable to make membranes, beads, tubes, plates, films or sheets.

A suitable example of a method for forming a membrane from a polyaryl ether sulfone polymer is described in US2019/054429A1 (Solvay Specialty Polymers USA), incorporated herein by reference.

### Polymer solution (SP)

Another aspect of the present invention is directed to a polymer solution/slurry (SP) for preparing a chromatography polymeric stationary material, which comprises the aminated PAES copolymer (P1) or functionalized PAES copolymer (P2) in a polar organic solvent [solvent (S_{SP})].

The polymer solution/slurry (SP) is preferably a polymer solution.

SP may further comprise at least one additional polymer distinct from the aminated PAES copolymer (P1) or functionalized PAES copolymer (P2) described herein, for example another sulfone polymer, e.g., PSU, PES, PPSU; a PPS; a PAEK, e.g., PEEK, PEKK, PEK or a PEEK-PEDEK copolymer; PPO; PLA; PEI; PC; PVP; and/or PEG.

SP may particularly contain PVP and/or PEG having a molecular weight of at least 200 g/mol, as pore forming agents.

The overall concentration of copolymer (P1) and/or copolymer (P2) and optional additional polymer(s) in SP may be at least 8 wt.%, or preferably at least 10 wt.%, based on the total SP weight and/or is at most 70 wt.%; or at most 60 wt.%; or at most 50 wt.%; or at most 40 wt.%; or at most 30 wt.%, based on the total SP weight. Concentrations of all polymers in SP ranging between 10 wt.% and 25 wt.%, and more preferably between 10 wt.% and 22 wt.%, based on the total SP weight are particularly advantageous.

The concentration of the solvent (S_{SP}) in SP may be at least 20 wt.%, preferably at least 30 wt.%, based on the total SP weight and/or is at most 70 wt.%; preferably, at most 65 wt.%; more preferably, at most 60 wt.%, based on the total SP weight.

The solvent (S_{SP}) in SP may be selected from a group consisting of 1,3-dimethyl-2-imidazolidinone (DMI), dimethylsulfoxide (DMSO), dimethylsulfone (DMSO2), dimethyl isosorbide (DMIso), methyl 5-(dimethylamino)-2-methyl-5-oxopentanoate (available under tradename Rhodiasolv^{®} Polar-clean), cyrene, ε-caprolactam, butyrolactone, diphenylsulfone, diethylsulfoxide, diethylsulfone, diisopropylsulfone, tetrahydrothiophene-1,1-dioxide (commonly called tetramethylene sulfone or sulfolane), N-Methyl-2-pyrrolidone (NMP), N-butylpyrrolidinone (NBP), N-ethylpyrrolidone (NEP), N,N'-dimethylacetamide (DMAc), N,N'-dimethylpropyleneurea (DMPU), dimethylformamide (DMF), tetrahydrofuran (THF), tetrahydrothiophene-1-monoxide, and mixtures thereof. Preferably the solvent (S_{SP}) in SP is DMAc, particularly suitable for preparing membranes or beads.

Exemplary solvents (S_{SP}) which may be used, alone or in combination, in SP are described in patent applications in US2019/054429A1 (Solvay Specialty Polymers Italy), in particular solvents described in paragraphs [0057]-[0129], and WO 2019/048652 (Solvay Specialty Polymers USA), incorporated herein by reference.

The SP may contain additional components, such as nucleating agents, fillers and the like.

### Use of the chromatography polymeric stationary material

Among applications of use, mention can be made of biotechnology and biopharmaceutical applications, wherein the chromatography polymeric stationary material, in particular a functionalized chromatography membrane and/or beads comprising, or made from, the functionalized PAES copolymer (P2) can advantageously be used. The chromatography polymeric stationary material, when being a functionalized membrane or beads, may be used in a monolithic separation column in which the shaft of the column is filled by at least one functionalized membrane or in a packed column in which the shaft of the column is filled by a plurality of functionalized beads. The use of the chromatography polymeric stationary material is preferably in affinity chromatography (which may include metal affinity chromatography), in hydrophobic interaction chromatography and/or in ion exchange chromatography.

In particular, the chromatography polymeric stationary material (preferably, the functionalized membrane or beads) may be used for purifying a target biomolecule from a biological fluid.

### Purification method for a biological fluid

A further aspect of the present invention may be directed to a purification method comprises at least a filtration step through the chromatography polymeric stationary material, preferably a functionalized chromatography membrane in a monolithic column or a plurality of functionalized beads in a packed column, said membrane or beads comprising, or made from, the functionalized PAES copolymer (P2) according to the invention and described herein.

Preferably, the purification method is for purifying a biological fluid that is carried out in one or more separation devices. The separation device for carrying out the method comprises at least one filtering device (or filter) comprising the chromatography polymeric stationary material according to the present invention, such as at least one functionalized chromatography membrane in a monolithic column or a plurality of functionalized beads in a packed column.

The purification method is preferably for purifying a target biomolecule from a biological fluid.

As intended herein, a biological fluid purification method through one or more separation devices preferably comprises the use of at least one functionalized membrane or a plurality of functionalized beads, said membrane or beads comprising, or made from, the functionalized PAES copolymer (P2), and said functionalized membrane or plurality of functionalized beads being preferably used as ion-exchange chromatography stationary phase, affinity chromatography stationary phase and/or hydrophobic chromatography stationary phase.

### EXAMPLES

The invention will be now described in more details with reference to the following examples, whose purpose is merely illustrative and not intended to limit the scope of the invention.

### Raw Materials

**DCDPS** (4,4'-dichlorodiphenyl sulfone), available from Solvay Speciality Polymers
**Bisphenol A (BPA),** available from Covestro
**BPS** (bisphenol S), available from Nicca Chemical company
**2,2' Diallyl Bisphenol A (daBPA),** available from Astatech
**Cysteamine hydrochloride,** available from Sigma-Aldrich, U.S.A.
**1-bromohexane,** available from Sigma-Aldrich, U.S.A.
**Methyl chloride,** available from Sigma-Aldrich, U.S.A.
**Succinic anhydride,** Sigma-Aldrich, U.S.A
**3-Carboxybenzenesulfonic acid sodium salt,** Sigma-Aldrich, U.S.A
**Glycidol,** available from Sigma-Aldrich, U.S.A.
**1,4 butanediol diglycidyl ether,** available from Sigma-Aldrich, U.S.A.
**Octonoyl chloride,** available from Sigma-Aldrich, U.S.A.
**Chloroacetyl chloride,** available from Sigma-Aldrich, U.S.A.
**Glucuronic acid,** available from Sigma-Aldrich, U.S.A.
**DMAPS** = 2-(Methacryloyloxy)ethyl]dimethyl-(3-sulfopropyl)ammonium hydroxide, available from Sigma-Aldrich, U.S.A. which is a sulfobetaine methacrylate (SBmA) of formula: 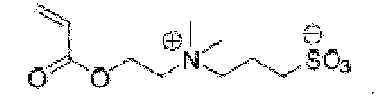
**1-Ethyl-3-(3-dimethylaminopropyl)carbodiimide (EDC)** , available from Sigma-Aldrich, U.S.A.
**N-hydroxy succinimide (NHS)** , available from Sigma-Aldrich, U.S.A.
**Chlorobenzene,** available from Sigma-Aldrich, U.S.A.
**NMP,** available from Sigma-Aldrich, U.S.A.
**Carbonyl diimidazole,** Sigma-Aldrich, U.S.A
**Dimethylformamide (DMF),** Sigma-Aldrich, U.S.A
**Tributylamine,** Sigma-Aldrich, U.S.A
**Potassium hydroxide,** available from Sigma-Aldrich, U.S.A.
**K₂CO₃** (Potassium Carbonate), available from Armand products
**Sulfolane,** available from Chevron Phillips.
**2,2'-Azobis (2,4 dimethylvaleronitryle) (ADVN),** available from Miller-Stephenson Chemical Company, U.S.A.

### Test methods

### Gel permeation chromatography (GPC) for measuring molecular weight (Mn, Mw) GPC Method 1 for measuring Molecular weight (Mn, Mw)

The molecular weights were measured by gel permeation chromatography (GPC), using **methylene chloride** as a mobile phase. Two 5µ mixed D columns with guard column from Agilent Technologies were used for separation. An ultraviolet detector of 254nm was used to obtain the chromatogram. A flow rate of 1.5 ml/min and injection volume of 20 µL of a 0.2 w/v% solution in mobile phase was selected. Calibration was performed with 12 narrow molecular weight polystyrene standards (Peak molecular weight range: 371,000 to 580 g/mol). The number average molecular weight Mn, weight average molecular weight Mw, and Polydispersity Index (PDI) = Mw/Mn were reported.

### GPC Method 2 for measuring Molecular weight (Mn, Mw)

Viscotek GPC Max (Autosampler, pump, and degasser) with a TDA302 triple detector array comprised of RALS (Right Angle Light Scattering), RI (Refractive Index) and Viscosity detectors were used. Samples were prepared as ~2 mg/mL in DMAc/ LiBr. Samples were run in **NMP** with 0.2 w/w% LiBr at 65°C at 1.0 mL/min through a set of 3 columns: a guard column (CLM1019 - with a 20k Da exclusion limit), a high Mw column (CLM1013 exclusion of 10MM Daltons relative to Poly Styrene) and a low Mw column (CLM1011 - exclusion limit of 20k Daltons relative to PS). Calibration was done with a single, mono-disperse polystyrene standard of ~100k Da. Light Scattering, RI, and Viscosity detectors were calibrated based on a set of input data supplied with the standards. Samples were prepared as about 2 mg/mL in NMP/LiBr. Viscotek's OMNISec v4.6.1 Software was used for data analysis.

### Thermal gravimetric analysis (TGA)

TGA experiments were carried out using a TA Instrument TGA Q500. TGA measurements were obtained by heating the sample at a heating rate of 10°C/min from 20°C to 800°C under nitrogen.

### ¹H NMR

¹H NMR spectra were measured using a 400 MHz Brüker spectrometer with TCE or DMSO as the deuterated solvent. All spectra are reference to residual proton in the solvent.

### Differential scanning calorimetry (DSC)

DSC was used to determine glass transition temperatures (Tg) and melting points (Tm)-if present. DSC experiments were carried out using a TA Instrument Q100. DSC curves were recorded by heating, cooling, re-heating, and then re-cooling the sample between 25°C and 320°C at a heating and cooling rate of 20°C/min. All DSC measurements were taken under a nitrogen purge. The reported Tg and Tm -if any values were provided using the second heat curve unless otherwise noted.

### Amine content estimation

A sample of 0.2 to 0.3g of polymer was dissolved in 55 mL of methylene chloride with stirring. 15 mL of glacial acetic acid was added. The sample was then titrated potentionmetrically with 0.1N perchloric acid in acetic acid using a Metrohm Titrando 809 Titrator with a Metrohm Solvotrode electrode. Perchloric acid titrant reacts with basic groups in the sample and produces an endpoint in the potential curve when all base has been neutralized. Two blanks and one control sample were tested prior to testing samples. Two replicates were run for each sample. The results were reported only after duplicate analyses agree within 5% for base concentration values above 100 µeq/g or were within 10 µeq/g for values below 100 µeq/g.
Calculation of base concentration: [Sample Base, µeq/g ] = (N perchloric acid) x (V perchlorid acid - V blank) x 1000/ W Sample
- N perchloric acid = number of moles of perchloric acid (N)
- V perchloric acid = volume of perchloric acid (mL)
- V blank = volume of blank (mL)
- W sample = weight of the sample (g)

The blank value was determined from the volume of titrant needed to achieve the same mV electrode potential as the sample titration endpoint potential.

### Elemental analysis

Elemental composition of some polymer samples was determined using a Perkin Elmer 2400 CHN Element Analyzer. The polymer samples were combusted based on the classical Pregl-Dumas method. The resultant combustion gases were completely reduced to CO₂, H₂O, N₂, and SO₂. Then the gases were separated via Frontal Chromatography. As the gases eluted they were measured by a thermal conductivity detector to determine quantitative amounts of Carbon, Hydrogen, Nitrogen and Sulfur.

### Example 1: Synthesis of the allyl-functionalized PSU copolymer precursor PO-A using 9 mol% daBPA and 91 mol% BPA (not according to the invention)

A batch of allyl-functionalized PSU copolymer **PO-A** was prepared according to **Scheme 1** described in WO 2020/187684A1 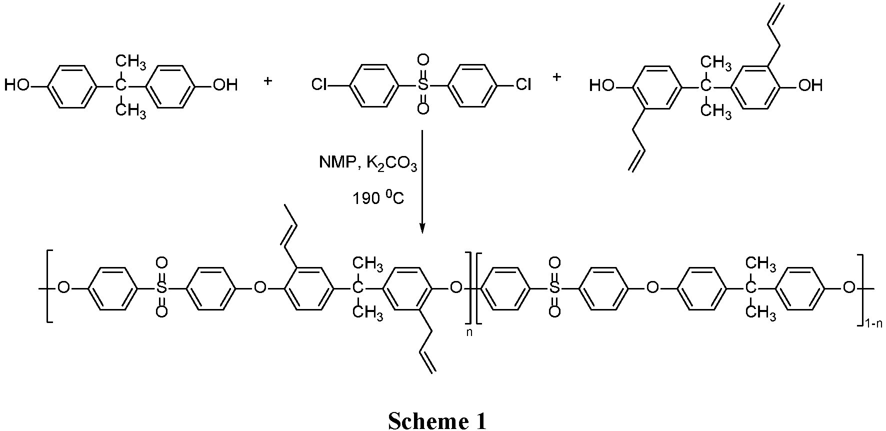 The polymerization took place in a 20-L glass reactor vessel fitted with an overhead stirrer, a nitrogen inlet and an overhead distillation set-up. The monomers **DCDPS** (2010.1 g; 7.0 moles), **BPA** (1398.3 g, 6.125 moles) and **daBPA** (274 g; 0.875 mole) were added to the vessel first, followed by the addition of **potassium carbonate** (1054.5 g; 7.63 moles) and **NMP** (5382 g). The reaction mixture was heated from room temperature to 190 °C using a 10°C/min heating ramp. The temperature of the reaction mixture was maintained for around eight hours, depending upon the viscosity of the solution. The reaction was terminated by adding fresh NMP (2977 g) and stopping the heat. The reaction mixture was filtered, coagulated into methanol. The polymer was then washed with methanol and water and again with methanol and dried at 110°C.

The copolymer was in the form of a racemate product. Due to the presence of the base and high temperature during polymerization, the 2,2'-diallyl bisphenol monomer racemized during polymerization in such a way that the position of the double bond changed along the side chains. This led to the formation of molecules differing from each other's by the fact that the double bond could be at the end of the side chain or one carbon before the end of the side chain, as in **Scheme 1.**

### Characterization of the allyl-functionalized PSU copolymer precursor PO-A

GPC Method 1 : Mw = 96202 g/mol, Mn = 20871 g/mol, PDI = 4.6
TGA: 473°C
DSC: Tg = 188°C
¹H NMR: The presence of unsaturated groups was confirmed by the appearance of a multiplet at 6.1-6.4 ppm which indicated the incorporation of the 2,2'-diallyl bisphenol A monomer in the copolymer precursor (P0-A).

### Example 2: Synthesis of the allyl-functionalized PES copolymer precursors P0-B and P0-C using 9 mol% daBPA and 91 mol% Bisphenol S (not according to the invention)

Two different batches of allyl-functionalized PES copolymer precursors **P0-B** and **P0-C** were prepared according to **Scheme 2** which is similar to **Scheme 3** described in WO 2020/187684A1 except that the reaction was carried out in sulfolane (instead of NMP) at 210°C (instead of 190°C).

Two different batches of PES copolymer precursors **P0-B** and **P0-C** were produced in the same manner as follows.

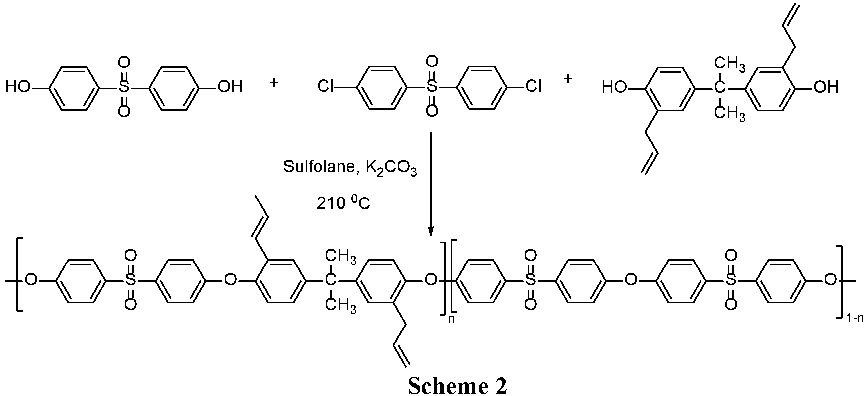

The polymerization took place in a 2-L glass reactor vessel fitted with an overhead stirrer, nitrogen inlet and an overhead distillation set-up. The monomers **4,4'-dichlorodiphenyl sulfone** (145.04 g), **bisphenol S** (113.89 g), **2,2' diallyl bisphenol A** (13.88 g) were added to the vessel first, followed by the addition of **potassium carbonate** (71.17 g), and **sulfolane** (651 g). The reaction mixture was heated from room temperature to 210 °C using a 150°C/min heating ramp. The temperature of the reaction mixture was maintained for about six hours, depending upon the viscosity of the solution. The reaction was stopped by passing excess methyl chloride to end-cap the PES copolymer precursor (converting the hydroxyl end groups to methoxy end groups). After end-capping, the reaction mixture was cooled and then filtered to remove the salts and then the copolymer precursor was coagulated into methanol. The solid copolymer precursor obtained was washed again with methanol twice and then dried at 110°C under vacuum for at least 12 hours.

The copolymer precursor was in the form of a racemate product. Due to the presence of the base and high temperature during polymerization, the 2,2'-diallyl bisphenol monomer racemized during polymerization in such a way that the position of the double bond changed along the side chains. This led to the formation of polymer molecules differing from each other's by the fact that the double bond could be at the end of the side chain or one carbon before the end of the side chain, as in **Scheme 2.**

### Characterization of the allyl-functionalized PES copolymer precursor P0-B

GPC (Method 1): Mw = 68771 g/mol; Mn = 19164 g/mol; PDI = 3.59
TGA = 474 °C
Tg (DSC) = 209 °C
¹H NMR: The presence of unsaturated groups was confirmed by the appearance of a multiplet at 6.1-6.4 ppm which indicated the incorporation of the 2,2'-diallyl bisphenol A monomer in the copolymer precursor (P0-B). The estimated daBPA content measured by ¹H NMR was around 4.1 mol%.

### Characterization of the allyl-functionalized PES copolymer precursor P0-C

GPC (Method 1): Mw = 87550 /mol; Mn = 20241 g/mol; PDI = 4.33
TGA = 468 °C
¹H NMR: The presence of unsaturated groups was confirmed by the appearance of a multiplet at 6.1-6.4 ppm which indicated the incorporation of the 2,2'-diallyl bisphenol A monomer in the copolymer precursor P0-C.

**Table 1** summarizes the characteristics of the copolymer precursors **P0-A, P0-B and P0-C.**

**Table 1**

| Example | | **1** | **2** | **2** |
|---|---|---|---|---|
| copolymer precursors P0 | | **PSU P0-A** | **PES P0-B** | **PES P0-C** |
| 1^{st} diol monomer | | 9 mol% daBPA | 9 mol% daBPA | 9 mol% daBPA |
| 2^{nd} diol monomer | | 91 mol% BPA | 91 mol% BPS | 91 mol% BPS |
| Dihalo monomer | | DCDPS | DCDPS | DCDPS |

| **Characterization of Copolymer precursors** | | | | |
|---|---|---|---|---|
| GPC method 1 | M_{w} | 96202 | 68771 | 87550 |
| | Mₙ | 20871 | 19164 | 20241 |
| | PDI | 4.6 | 3.59 | 4.33 |
| TGA, °C | | 473 | 474 | 468 |
| Tg, °C | | 188 | 209 | nd |

| | | | | |
|---|---|---|---|---|
| *nd: not determined* | | | | |

### Example 3: Synthesis of the aminated PSU copolymer copolymers P1-A, P1-B, P1-C and P1-D from allyl-functionalized PSU copolymer precursor PO-A (not according to the invention)

Four different batches of **amine-functionalized PSU copolymers P1-A, P1-B, P1-C** and **P1-D** were prepared according to **Scheme 3** and were produced in the same manner as follows.

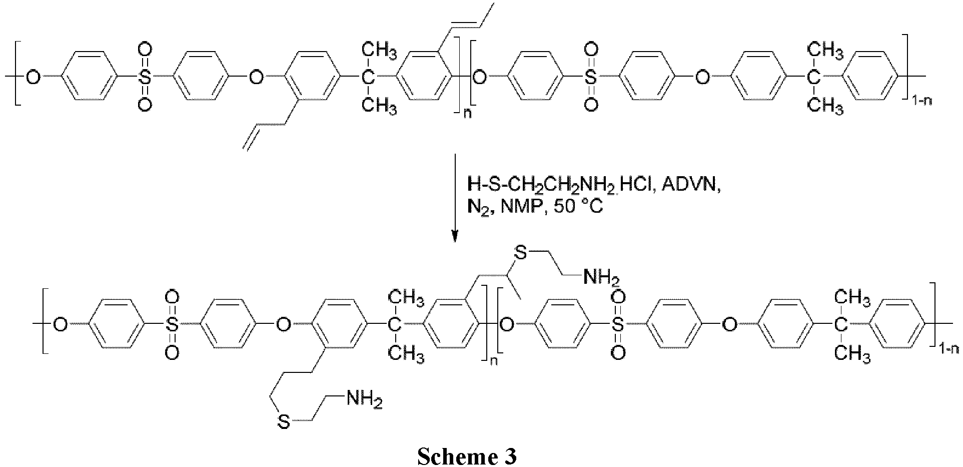

In a 2 L three-necked flask equipped with a nitrogen inlet, a thermocouple and an overhead stirrer, 200 g of the **allyl-functionalized PSU copolymer precursor P0-A** made in **Example 1** were dissolved in 1000 g of NMP and heated to 50 °C with constant stirring. To this solution, 105.2 g of **cysteamine hydrochloride** was added in one portion to make a homogenous mixture, and the reaction mixture was purged with nitrogen for 45 minutes after which 34.5 g **of ADVN** was added in small portions over a period of 30 minutes. The reaction was allowed to continue at least for 24 hours. After 24 hours, the heating was stopped and the polymer was recovered by coagulating the reaction mixture in methanol and then the solid polymer was washed with water twice and with methanol twice. The polymer was then filtered and then washed with **tributyl amine** at 70 °C for three hours and then coagulated in 1N sodium hydroxide solution and then filtered. The polymer was then washed again twice with water and with methanol and then filtered. The polymer was then dried at 110 °C for 12 hours.

### Characterization of the aminated PSU copolymer P1-A

GPC (Method 2): Mw = 64949 g/mol; Mn = 201875 g/mol; PDI = 3.11
Amine content: 961 microeq/g
Tg (DSC) = 158 °C
TGA = 368 °C

### Characterization of the aminated PSU copolymer P1-B

GPC (Method 2): Mw = 121602 g/mol; Mn = 22411 g/mol; PDI = 5.34
Amine content: 852 microeq/g

### Characterization of the aminated PSU copolymer P1-C

GPC (Method 2): Mw = 6253 g/mol; Mn = 2878 g/mol; PDI = 2.53
Amine content: 699 microeq/g
Tg (DSC) = 143°C
TGA = 386°C

### Characterization of the aminated PSU copolymer P1-D

GPC (Method 2): Mw = 141619 g/mol; Mn = 64560 g/mol; PDI = 2.19
Amine content: 419 microeq/g
Tg (DSC) = 232°C
TGA = 496 °C

### Example 4: Synthesis of the aminated PES copolymers P1-E and P1-F (not according to the invention)

Two different batches of **aminated PES copolymers P1-E** and **P1-F** were prepared according to **Scheme 4** which is similar to **Scheme 7** described in WO 2020/187684A1**,** except that the reaction mixture contained ADVN (instead of AIBN) and the reaction was carried out in NMP at 50°C (instead of 70°C).

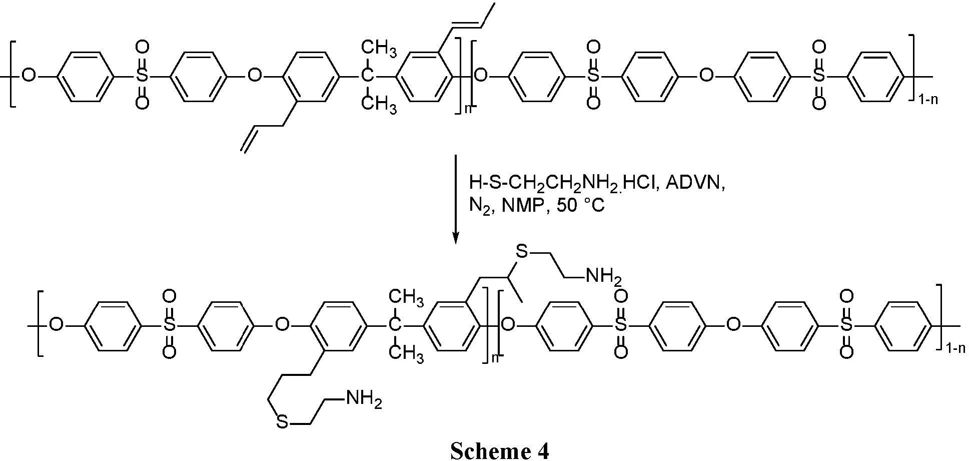

The two different batches of aminated PES copolymers **P1-E** and **P1-F** were produced from the allyl-functionalized PES copolymer precursors **P0-B** and **P0-C,** respectively, in the same manner as follows.

In a 500 mL three-necked flask equipped with a nitrogen inlet, a thermocouple and an overhead stirrer, 100 g of the allyl-functionalized PES copolymer precusors **P0-B or P0-C** made in **Example 2** was dissolved in 233 g of NMP and heated to 50 °C with constant stirring. To this solution, 27.7 g of **cysteamine hydrochloride** was added in one portion to make a homogenous mixture and the reaction mixture was purged with nitrogen for 45 minutes after which 9.6 g of **ADVN** was added in small portions over a period of 30 minutes. The reaction was allowed to continue at least for 24 hours. After 24 hours, the heating was stopped and the aminated copolymer was recovered by coagulating the reaction mixture in methanol and then the solid polymer was washed with water twice and with methanol twice. The aminated copolymer was then filtered and then washed with tributyl amine at 70 °C for three hours and then coagulated in 1N sodium hydroxide solution and then filtered. The polymer was then washed again twice with water and with methanol and then filtered. The polymer was then dried at 110 °C for 12 hours.

### Characterization of the aminated PES copolymer P1-F

GPC (Method 2): Mw = 286025 g/mol ; Mn = 84646 g/mol; PDI = 3.38
Amine content: 686 microeq/g
Tg (DSC) = 203 °C
TGA = 371 °C

Table 2a summarizes the characteristics of the aminated copolymers P1-A to P1-F.

**Table 2a**

| Aminated copolymers (P1) | | **P1-A** | **P1-B** | **P1-C** | **P1-D** | **P1-E** | **P1-F** |
|---|---|---|---|---|---|---|---|
| Amine functionalization | | cysteamine hydrochloride + ADVN | | | | | |

| **Characterization of aminated copolymers (P1)** | | | | | | | |
|---|---|---|---|---|---|---|---|
| GPC method 2 | M_{w} | 201875 | 121602 | 6253 | 141619 | 167575 | 286025 |
| | Mₙ | 64949 | 22411 | 2878 | 64560 | 66230 | 84646 |
| | PDI | 3.11 | 5.34 | 2.17 | 2.19 | 2.53 | 3.38 |
| TGA, °C | | 368 | nd | 386.21 | 496 | 319.6 | 371 |
| Tg, °C | | 158 | nd | 143.16 | 232 | 231 | 203 |
| Amine, microeq/g | | 961 | 852 | 699 | 419 | 686 | 434 |

| | | | | | | | |
|---|---|---|---|---|---|---|---|
| *nd: not determined* | | | | | | | |

Table 2b summarizes the characteristics of the blend P1-E+F.

**Table 2b**

| Aminated copolymer | | **Blend P1-E+F** |
|---|---|---|
| GPC method 2 | M_{w} | 50595 |
| | Mₙ | 22933 |
| | PDI | 2.21 |
| Amine, microeq/g | | 560 |

The aminated PSU and PES copolymers (P1) made according to the procedure provided in **Examples 3 and 4** and characterized in **Tables 2a** and **2b** were used as parent copolymers to attach different moieties **Z** to form various functionalized PSU and PES copolymers (P2) in **Examples 5 to 14**.

### Example 5: Making functionalized PSU copolymer P2-A via side-chain functionalization by hexyl bromide (compound Z1*) of amine-functionalized parent PSU polymer P1-A (according to the invention)

A batch of **functionalized PSU polymer P2-A** was prepared according to **Scheme 5** and was produced from the **amine-functionalized parent PSU polymer P1-A** in the manner that follows.

In a 500 mL three-necked flask equipped with a nitrogen inlet, a thermocouple and an overhead stirrer, 150 g of the **amine-functionalized parent PSU polymer P1-A** made in **Example** 3 was dissolved in 290 g of NMP and heated to 80 °C with constant stirring. To this solution 109 g of 1-bromohexane was added in one portion and the reaction was allowed to continue at least for 24 hours. After 24 hours, the heating was stopped and the polymer was recovered by coagulating the reaction mixture in methanol and then the solid polymer was washed with methanol twice and then dried at 110 °C for 12 hours.

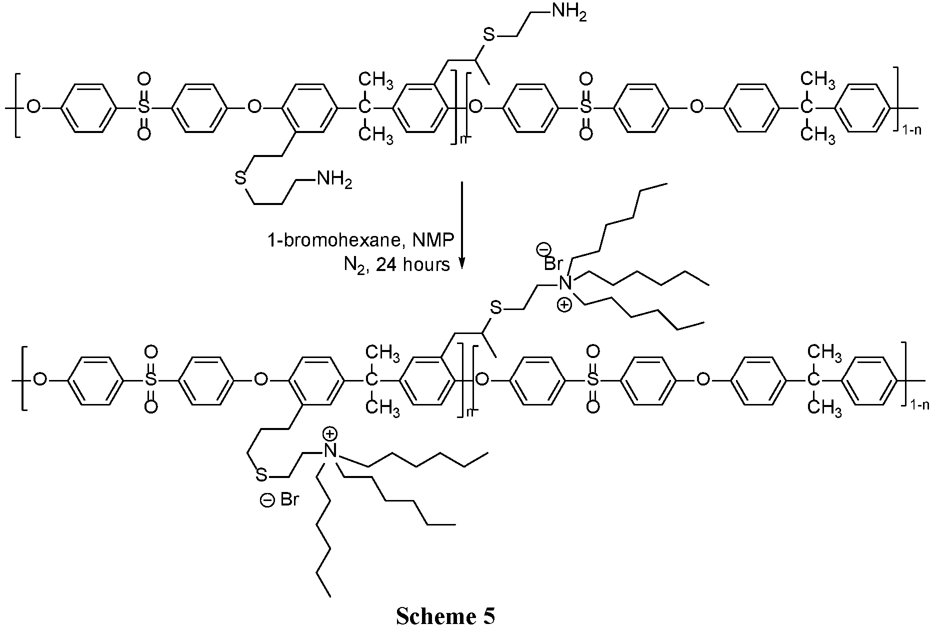

### Characterization of the functionalized PSU polymer P2-A

GPC (Method 2): Mw = 170277 g/mol; Mn = 45921 g/mol; PDI = 3.71
Bromide content: 2234.05 ppm
Tg (DSC) = 156 °C
TGA = 501 °C
¹H NMR analysis detected the hexyl chains by the presence of aliphatic signals from 0.5 to 3 ppm.

### Example 6: Making functionalized PSU copolymer P2-B via side-chain functionalization by methyl chloride (compound Z2*) of amine-functionalized parent PSU polymer P1-A (according to the invention)

A batch of **functionalized PSU polymer P2-B** was prepared according to **Scheme 6** and was produced from the **amine-functionalized parent PSU polymer P1-A** in the manner that follows.

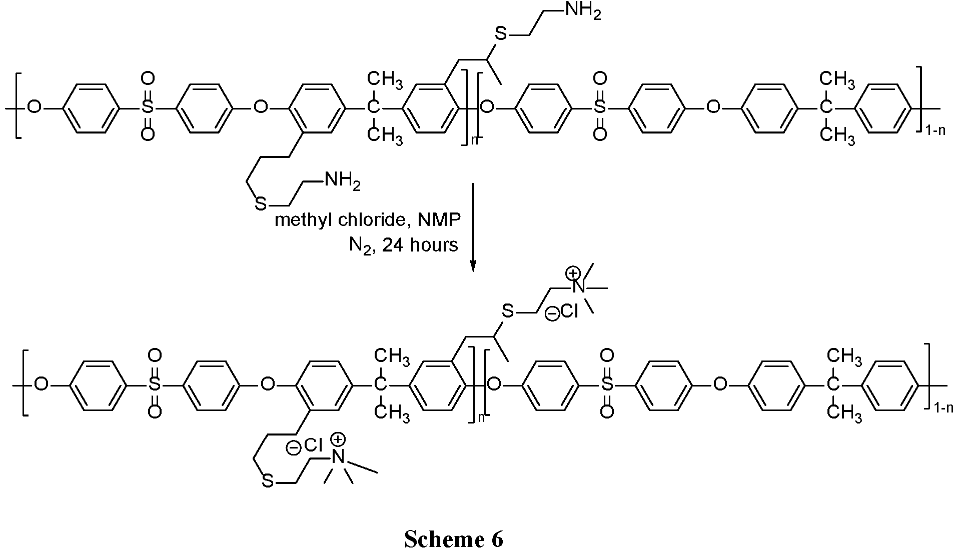

In a 500 mL three-necked flask equipped with a nitrogen inlet, a thermocouple and an overhead stirrer, 150 g of the **amine-functionalized parent PSU polymer P1-A** made in **Example 3** was dissolved in 273 g of NMP and heated to 70 °C with constant stirring. To this solution excess methyl chloride gas (230 g) was bubbled for three hours and the reaction was allowed to continue at least for 12 hours. After 12 hours, the heating was stopped and the polymer was recovered by coagulating the reaction mixture in methanol and then the solid polymer was washed with methanol twice and then dried at 110 °C for 12 hours.

### Characterization of the functionalized PSU copolymer P2-B

GPC (Method 2): Mw = 232874 g/mol; Mn = 48779 g/mol; PDI = 4.7
Chloride content: 787 ppm
Tg (DSC) = 174 °C
TGA = 509 °C

### Example 7: Making functionalized PSU copolymer P2-C via side-chain functionalization by succinic acid (compound Z4*) of the amine-functionalized parent PSU polymer P1-B (according to the invention)

A batch of **functionalized PSU polymer P2-C** was prepared according to Scheme 7 and was produced from the **amine-functionalized parent PSU polymer P1-B** in the manner that follows.

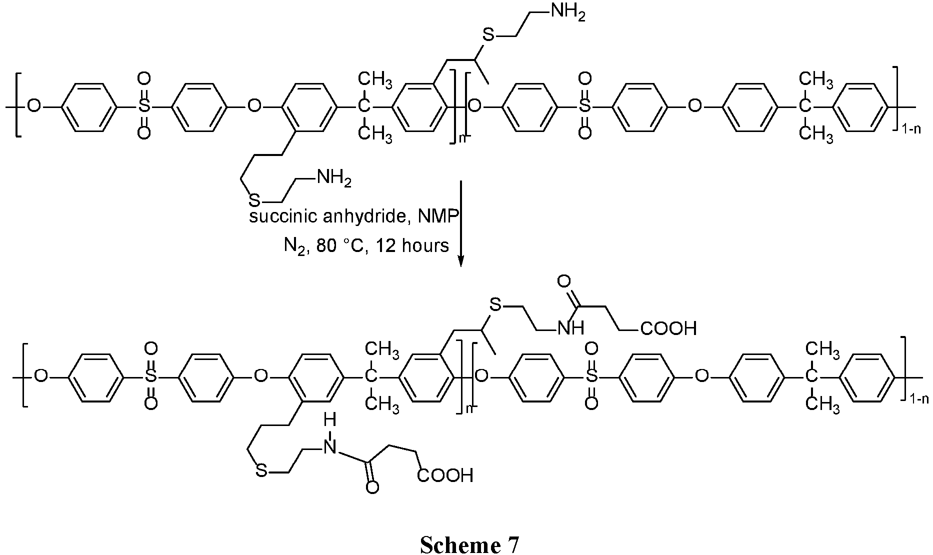

In a 250 mL three-necked flask equipped with a nitrogen inlet, a thermocouple and an overhead stirrer, 20 g of the **aminated PSU copolymer P1-B** described in **Example 3** was dissolved in 80 g of NMP and heated to 80 °C with constant stirring. To this solution 3.41 g of **succinic anhydride** was added in one portion and the reaction was allowed to continue at least for 12 hours. After 12 hours, the heating was stopped and the polymer was recovered by coagulating the reaction mixture in methanol and then the solid polymer was washed with methanol twice and then dried at 110 °C for 12 hours.

### Characterization of the succinic acid functionalized PSU copolymer P2-C

GPC (Method 2): Mw = 174977 g/mol; Mn = 46973 g/mol; PDI = 3.7
Amine content: 10 microeq/g
Carboxylic acid content: 395 microeq/g
Tg (DSC) = 160 °C
TGA = 389°C

### Example 8: Making functionalized PSU copolymer P2-D via side-chain functionalization by 3-carboxybenzene sulfonate (compound Z5*) of the aminated PSU copolymer P1-B (according to the invention)

A batch of **functionalized PSU polymer P2-D** was prepared according to **Scheme 8** and was produced from the **aminated PSU polymer P1-B** in the manner that follows.

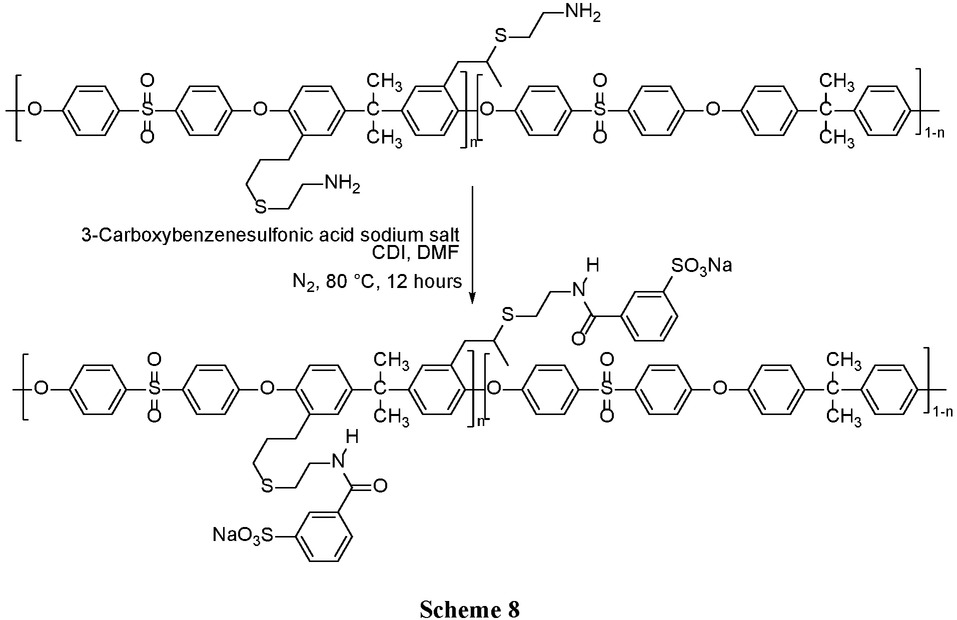

In a 250 mL three-necked flask equipped with a nitrogen inlet, a thermocouple and an overhead stirrer, 15 g of **3-Carboxybenzenesulfonic acid sodium salt** was dissolved in 30 g of **dimethylformamide (DMF)** and heated to 60 °C with constant stirring. To this solution 3.9 g of **carbonyl diimidazole (CDI)** was added and the reaction mixture was stirred under nitrogen for additional 30 minutes.

To this reaction mixture, a solution of 15 g of **amine-functionalized parent PSU polymer P1-B** described in **Example 3** in 30 g of **DMF** was added and then the reaction was allowed to continue at least for 12 hours. After 12 hours, the heating was stopped and the polymer was recovered by coagulating the reaction mixture in water and then the solid polymer was washed with methanol twice and then dried at 110 °C for 12 hours.

### Characterization of the functionalized PSU copolymer P2-D

GPC (Method 2): Mw = 134179 g/mol; Mn = 44182 g/mol; PDI = 3.04
Sodium content: 2583 ppm
Tg (DSC) = 187 °C
TGA = 479 °C

### Example 9: Making functionalized PSU copolymer P2-E via side-chain functionalization by glucuronic acid (compound Z6*) of the aminated PSU copolymer P1-C (according to the invention)

A batch of **functionalized PSU polymer P2-E** was prepared according to **Scheme 9.** The functionalized PSU polymer **P2-E** was produced from the amine-functionalized parent PSU polymer **P1-C** in the manner that follows.

In a 1-L glass beaker, 6.78 g of **glucuronic acid,** 5.45 g of **1-Ethyl-3-(3-dimethylaminopropyl)carbodiimide** (EDC) and 4.02 g of **N-hydroxy succinimide** (NHS) were dissolved in 600 g of water at 60 °C and then added to a lab blender.

10g of the **amine-functionalized parent PSU polymer P1-C** described in **Example 3** were dissolved in 40 g of DMAc to form a polymer solution. This polymer solution was then coagulated by pouring the solution into the aqueous solution containing glucuronic acid, EDC and NHS, the mixture was blended for about one minute and the mixture was allowed to rest at room temperature for 1 hour.

The mixture was then filtered and then extensively washed with water three times and then with methanol twice and then dried.

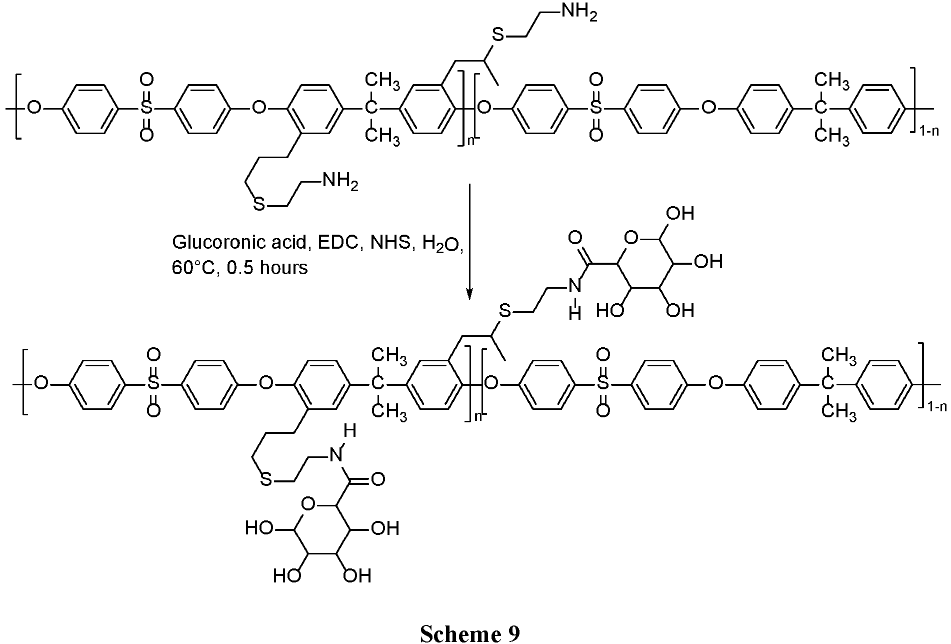

It is to be noted that the structure for the glucuronic functionalized PSU copolymer P2-E provided in Scheme 9 is an idealized structure. In practice, there may be various embodiments in its actual chemical structure of this modified polymer because it is expected that there may be some instances of ring opening of the pyranose ring - a chemical structure that includes a six-membered ring consisting of five carbon atoms and one oxygen atom which is present in the glucuronic acid.

### Characterization of the glucuronic functionalized PSU copolymer P2-E

GPC (Method 2): Mw = 95611 g/mol; Mn = 35529 g/mol; PDI = 2.69
   It was noted that the PSU copolymer P2-E was not completely soluble in DMAc used as the mobile phase in this GPC method 2.
Amine content: 137 microeq/g
Tg (DSC) = 182 °C
TGA = ~ 200 and 391 °C
Detection of carbonyl ¹³C NMR signal at 162 ppm.

### Example 10: Making functionalized PSU copolymer P2-F via side-chain functionalization by aza addition with DMAPS (compound Z7*) to the aminated PSU copolymer P1-D (according to the invention)

A batch of **functionalized** PSU **polymer P2-F** was prepared according to **Scheme 10** and was produced from the **amine-functionalized parent PSU polymer P1-D** in the manner that follows.

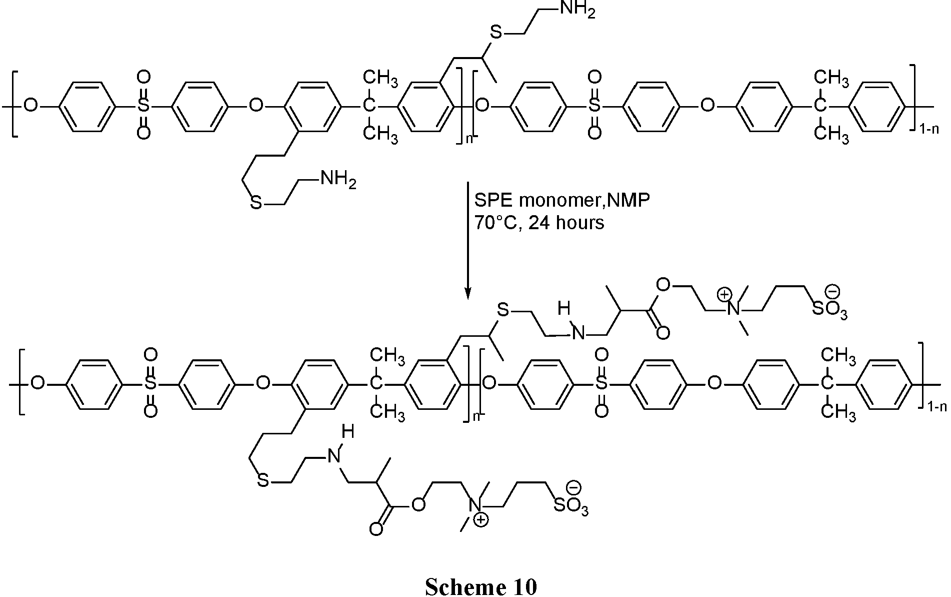

In a 500 mL three necked flask equipped with a nitrogen inlet, a thermocouple and an overhead stirrer, 107.45 g of the aminated PSU copolymer P1-D described in **Example 3** was dissolved in 600 g of anhydrous NMP. To this solution 25.16 g of [2-**(Methacryloyloxy)ethyl]dimethyl-(3-sulfopropyl)ammonium hydroxide** (DMAPS) was added and mixture was heated to 70 °C under nitrogen for 24 hours. After 24 hours, the heating was stopped and the polymer was recovered by coagulating the reaction mixture in methanol and then the solid polymer with water twice followed by methanol and then dried at 110 °C for 12 hours.

### Characterization of the DMAPS functionalized PSU copolymer P2-F

GPC (Method 2): Mw = 321764 g/mol; Mn = 46554 g/mol; PDI = 6.9
Tg (DSC) < 200 °C.
Due to the low degradation temperature, DSC analysis was not done.
TGA = 475 °C
DMAPS content estimated by H NMR: 8.3 mol%

### Example 11: Making functionalized PES copolymer P2-G via side-chain functionalization by octonoyl chloride (compound Z3*) from a blend P1-E+F of the aminated PES copolymers P1-E and P1-F

A batch of **functionalized PES polymer P2-G** was prepared according to **Scheme 11** and was produced from a blend **P1-E+F** of the **aminated PES copolymers P1-E and P1-F** in the manner that follows.

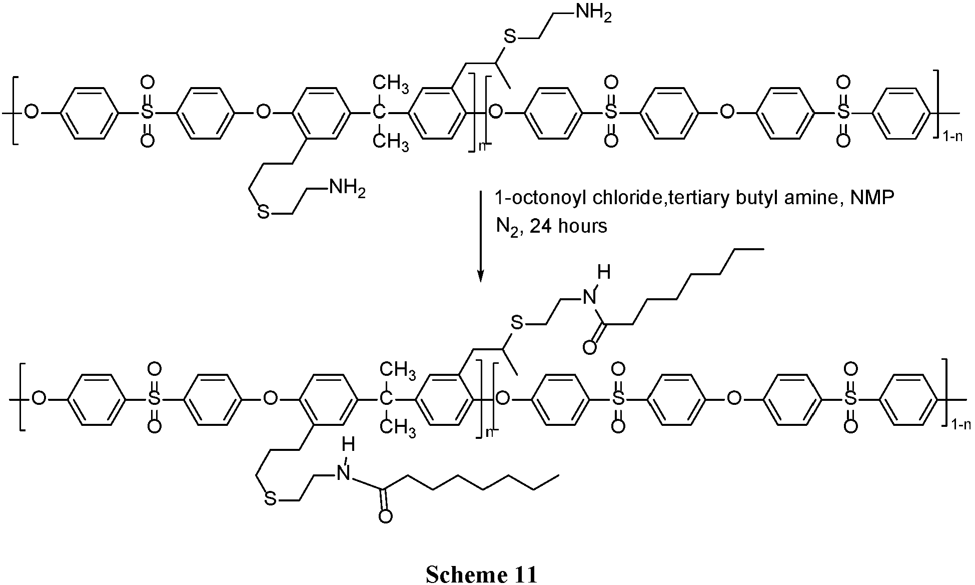

The amine-functionalized PES copolymers P1-E and P1-F made in **Example 4** were mixed to form the blend ***P1-E+F*** with a mixing weight ratio of 50w:50w.

### Characterization of the blend P1-E+F of amine-functionalized PES copolymers

GPC (Method 2): Mw = ~220,000 g/mol; Mn = 75,000 g/mol; PDI = 2.93
   It is to be noted that the average values of Mw, Mn and PDI of **blend *P1-E+F*** were calculated from their individual values for **P1-E** (Mw = 167757g/mol; Mn = 66230 g/mol ; PDI = 2.53 by GPC Method 2) and **P1-F** (Mw = ~286025 g/mol; Mn = 84646 g/mol; PDI = 3.38 by GPC Method 2).
Amine content: 560 microeq/g

In a 500 mL three necked flask equipped with a nitrogen inlet, a thermocouple and an overhead stirrer, 15.5 g of the **aminated PSU copolymer** blend **P1**-**E+F** was dissolved in 75 g of anhydrous NMP and 1.65 g **tributylamine** and 20.6 g of chlorobenzene, the mixture was azeotropically dehydrated by heating the solution to 150 °C and distilling off most of the chlorobenzene.

The solution is then cooled to 65 °C and to this solution 1.45 g of **octonoyl chloride** was added carefully and reaction continued at 65 °C under nitrogen for 12 hours.

After 24 hours, the heating was stopped and the polymer was recovered by coagulating the reaction mixture in methanol and then the solid polymer with methanol and then dried at 110 °C for 12 hours.

### Characterization of the octonoyl chloride functionalized PES copolymer P2-G

GPC (Method 2): Mw = 50595 g/mol; Mn = 22933 g/mol; PDI = 2.21
Tg (DSC) = 174 °C
TGA = 376 °C

### Example 12: Making functionalized PES copolymer P2-H via side-chain functionalization by glycidol (compound Z9*) from a blend P1-E+F of the aminated PES copolymers P1-E and P1-F

A batch of **functionalized PSU polymer P2-H** was prepared according to **Scheme 12** and was produced from the blend **P1**-**E+F** of the aminated PES copolymers **P1-E and P1-F** in the manner that follows.

In a 500 mL three necked flask equipped with a nitrogen inlet, a thermocouple and an overhead stirrer, 15.4 g of the **aminated PES copolymer blend P1**-**E+F** described in **Example 11** was dissolved in ~75 g of anhydrous NMP and ~1.65 g **tributylamine** and ~20.6 g of **chlorobenzene,** the mixture was azeotropically dehydrated by heating the solution to 150 °C and distilling off most of the chlorobenzene. The solution is then cooled to 65 °C and to this solution 0.65 g of **glycidol** was added carefully and reaction continued at 65 °C under nitrogen for 12 hours. After 24 hours, the heating was stopped and the polymer was recovered by coagulating the reaction mixture in methanol and then the solid polymer with methanol and then dried at 110 °C for 12 hours.

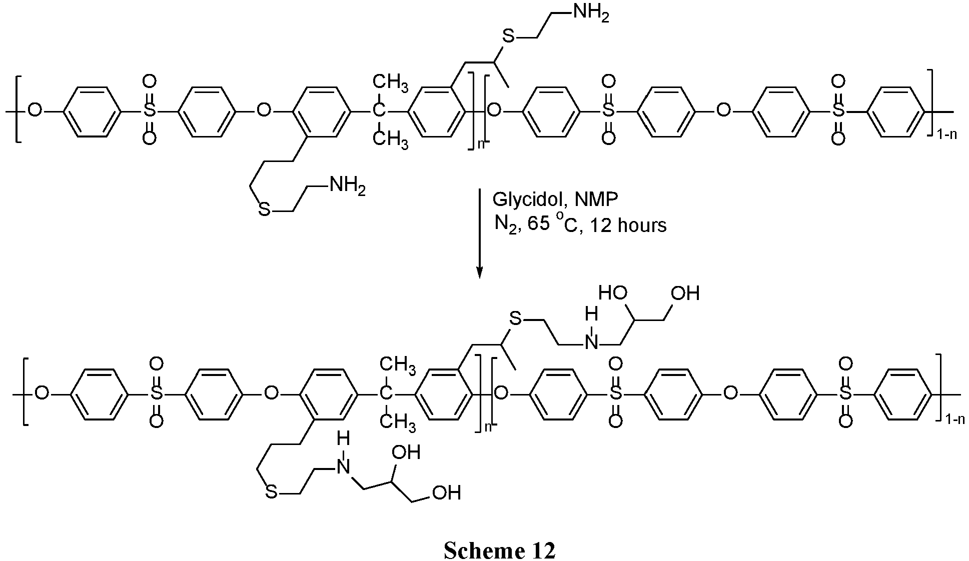

### Characterization of the glycidol functionalized PES copolymer P2-H

GPC (Method 2): Mw = 55188 g/mol; Mn = 24125 g/mol; PDI = 2.29
Tg (DSC) = 162 °C
TGA = 382 °C

### Example 13: Making functionalized PES copolymer P2-I via side-chain functionalization by chloroacetyl chloride (compound Z8*) from a blend P1-E+F of the aminated PES copolymers P1-E and P1-F

A batch of **functionalized PES polymer P2-I** was prepared according to **Scheme 13** and was produced from a blend of the **aminated PES copolymers P1-E and P1-F** in the manner that follows.

In a 500 mL three necked flask equipped with a nitrogen inlet, a thermocouple and an overhead stirrer, 15.4 g of the **aminated PES copolymer** blend **P1**-**E+F** described in **Example 11** was dissolved in ~74 g of anhydrous **NMP** and ~1.65 g **tributylamine** and ~20.6 g of **chlorobenzene,** the mixture was azeotropically dehydrated by heating the solution to 150 °C and distilling off most of the chlorobenzene.
The solution is then cooled to 65 °C and to this solution 1g of **chloroacetyl chloride** was added carefully and reaction continued at 65 °C under nitrogen for 12 hours. After 24 hours, the heating was stopped and the polymer was recovered by coagulating the reaction mixture in methanol and then the solid polymer with methanol and then dried at 110 °C for 12 hours.

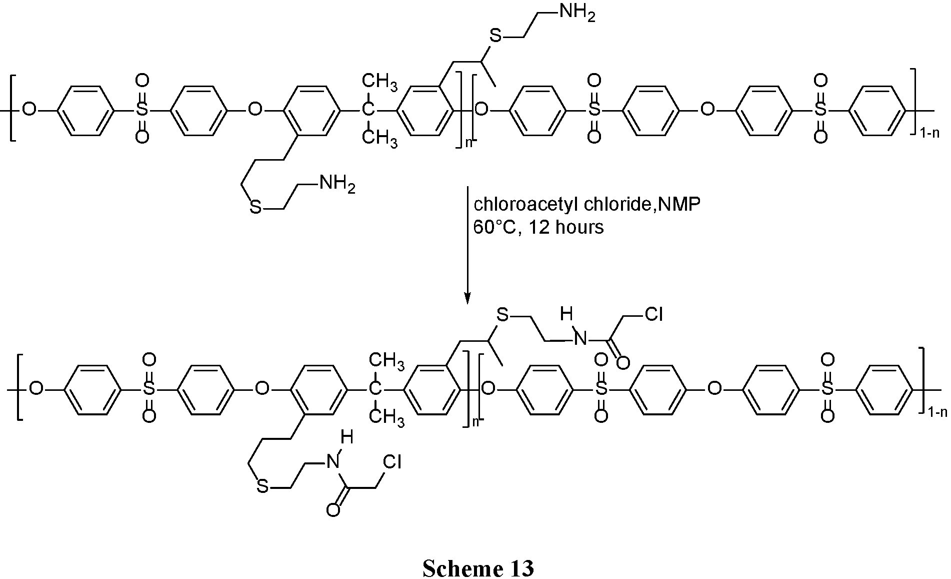

### Characterization of the functionalized PES copolymer P2-I

GPC (Method 2): Mw = 81348 g/mol; Mn = 26247 g/mol; PDI = 3.1
Tg (DSC) = 201 °C
TGA = 377 °C
Chlorine content: 4950 ppm

### Example 14: Making functionalized PES copolymer P2-J _via side-chain functionalization by maleic anhydride (compound Z10*) from a blend P1-E+F of the aminated PES copolymers P1-E and P1-F

A batch of **functionalized PES polymer P2-J** was prepared according to **Scheme 14** and was produced from a blend of the **aminated PES copolymers P1-E and P1-F** in the manner that follows.

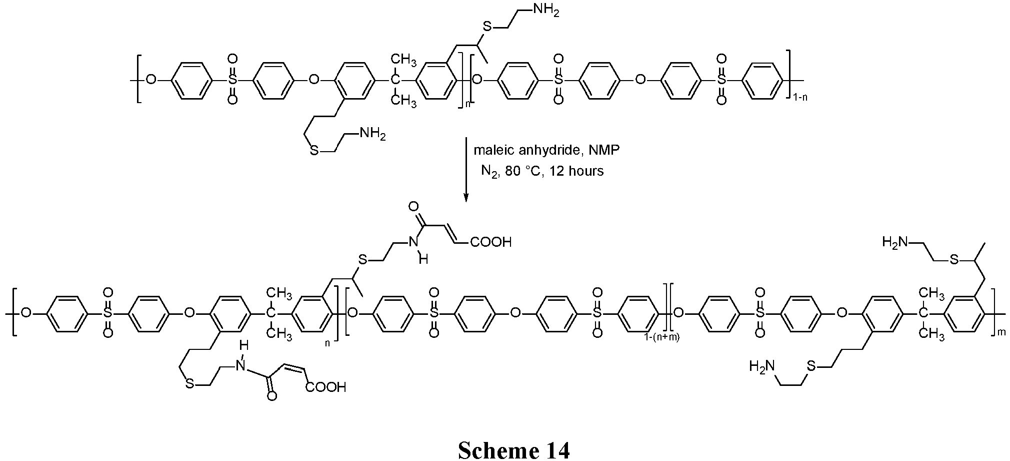

In a 500 mL three necked flask equipped with a nitrogen inlet, a thermocouple and an overhead stirrer, 20 g of the **aminated PES copolymer** blend **P1-E+F** described in **Example 11** was dissolved in ~8 g of anhydrous NMP and ~1.65 g tributylamine and ~20.6 g of chlorobenzene, the mixture was azeotropically dehydrated by heating the solution to 150 °C and distilling off most of the chlorobenzene.
The solution was then cooled to 85 °C and to this solution 0.36 g of **maleic anhydride** was added carefully and the reaction continued at 85 °C under nitrogen for 12 hours. The added amount of maleic anhydride was less than the stoichiometric amount necessary to react with all of the -NH₂ groups, thereby leaving some unreacted -NH₂ functional groups (which originated from the aminated PES copolymer) in the resulting functionalized copolymer **P2-J.** The functionalized copolymer **P2-J** thus had multifunctional side-chain moieties, some moieties of formula: -(CH₂)₂-NH-C(O)-CH=CH-COOH) having a carbonyl moiety, a reactive double bond and a carboxylic moiety while some moieties were amine moiety of formula: -(CH₂)₂-NH₂.
After 24 hours, the heating was stopped and the copolymer **P2-J** was recovered by coagulating the reaction mixture in methanol and then the solid polymer with methanol and then dried at 110 °C for 12 hours.

### Characterization of the functionalized PES copolymer P2-J

GPC (Method 2): Mw = 302217 g/mol; Mn = 79862 g/mol; PDI = 3.78
Carboxylic acid content = 133.6 microeq/g
Tg (DSC) = 203 °C
TGA = 377 °C

**Tables 3a, 3b, 3c** summarize the characteristics of the copolymers **P2-A** to **P2-J.**

**Table 3a**

| Example | | **5** | **6** | **7** | **8** |
|---|---|---|---|---|---|
| Functionalized copolymers P2 | | **PSU** | **PSU** | **PSU** | **PSU** |
| | | **P2-A** | **P2-B** | **P2-C** | **P2-D** |
| compound Z* | | hexyl bromide [Z1*] | methyl chloride [Z2*] | succinic anhydride [Z4*] | 3-carboxybenzene sulfonic acid sodium salt [Z5*] |
| Moiety type | | Z1 | Z2 | Z4 | Z5 |
| Type of functionality | | Hydrophobic quaternary ammonium functionality | Non-hydrophobic quaternary ammonium functionality | Acidic functionality | Ion (cation) exchange functionality |
| Aminated copolymers P1 | | **PSU P1-A** | **PSU P1-A** | **PSU P1-B** | **PSU P1-B** |

| **Characterization of Functionalized Copolymers P2** | | | | | |
|---|---|---|---|---|---|
| GPC method 2 | M_{w} | 170277 | 232874 | 174977 | 134179 |
| | Mₙ | 45921 | 48779 | 46973 | 44182 |
| | PDI | 3.71 | 4.7 | 3.7 | 3.04 |
| TGA, °C | | 501 | 509 | 389 | 479 |
| Tg, °C | | 156 | 174 | 160 | 187 |
| Other characteristics | | Br content 2234 ppm | Chloride content: 787 ppm | carboxylic acid content: 395 microeq/g | Sodium content: 2583 ppm |

**Table 3b**

| Example | | **9** | **10** | **11** |
|---|---|---|---|---|
| Functionalized copolymers P2 | | **PSU** | **PSU** | **PES** |
| | | **P2-E** | **P2-F** | **P2-G** |
| Functionalization compound Z* | | glucuronic acid **[Z6*]** | ^{b}DMAPS **[Z7*]** | octonoyl chloride **[Z3*]** |
| Moiety type | | Z6 | Z7 | Z3 |
| Type of functionality | | Biomolecule functionality | Zwitterionic functionality | Hydrophobic functionality |
| Aminated copolymers P1 | | **PSU P1-C** | **PSU P1-D** | **PES blend P1**-**E+F** |

| **Characterization of Functionalized Copolymers P2** | | | | |
|---|---|---|---|---|
| GPC method 2 | ^{a}M_{w} | 95611 | 321764 | 50595 |
| | Mₙ | 35529 | 46554 | 22933 |
| | PDI | 2.69 | 6.9 | 2.21 |
| TGA, °C | | ∼ 200 and 391 | 475 | 376 |
| Tg, °C | | 182 | nd | 174 |
| Other characteristics | | carbonyl ¹³C NMR signal at 162 ppm | DMAPS content (¹H-NMR): 8.3 mol% | |

| | | | | |
|---|---|---|---|---|
| ^{a} PSU copolymer P2-E was not completely soluble in DMAc ^{b} DMAPS = 2-(Methacryloyloxy)ethyl]dimethyl-(3-sulfopropyl)ammonium hydroxide | | | | |

**Table 3c**

| Example | | **12** | **13** | **14** |
|---|---|---|---|---|
| Functionalized copolymers P2 | | **PES** | **PES** | **PES** |
| | | **P2-H** | **P2-I** | **P2-J** |
| Functionalization compound Z* | | glycidol **[Z9*]** | chloroacetyl chloride **[Z8*]** | maleic anhydride **[Z10*]** |
| Moiety | | Z9 | Z8 | Z10 |
| Type of functionality | | Hydroxyl functionality | Chloromethyl functionality | Multi-functionality |
| Aminated copolymers P1 | | **PES blend P1**-**E+F** | **PES blend P1**-**E+F** | **PES blend P1**-**E+F** |

| **Characterization of Functionalized Copolymers P2** | | | | |
|---|---|---|---|---|
| GPC method 2 | M_{w} | 55188 | 81348 | 302217 |
| | Mₙ | 24125 | 26247 | 79862 |
| | PDI | 2.29 | 3.1 | 3.78 |
| TGA, °C | | 382 | 377 | 377 |
| Tg, °C | | 162 | 201 | 203 |
| Other characteristics | | | Chlorine content: 4950 ppm | Carboxylic acid content = 133.6 microeq/g |

### Example 15: Casting of membrane via in-situ method (b)

A membrane comprising functionalized PAES copolymer (P2) may be cast from an aminated PAES copolymer (P1) in the presence of a functional compound Z* via the so-called *in-situ* "method (b)" using a phase inversion protocol.

### Preparation of Z*-containing solution

A solution containing a functional compound Z* is prepared using
- a polar solvent such as N,N dimethylacetamide (DMAc);
- a functional compound Z* stock solution;
- a coupling agent stock solution (such as EDC and/or NHS in water), if used;
- non-solvent such as water and/or C1-C5 alcohol (e.g., methanol or ethanol).
Typical conditions for phase inversion protocol are provided in **Table 4** which provide a precipitation bath.

**Table 4**

| Precipitation bath | weight % |
|---|---|
| Solvent | 5 to 40 wt%. |
| Compound Z* stock solution | 10 wt%. |
| Coupling agent stock solution | 10 wt%. |
| Non-solvent | up to 100 wt% |

For covalently binding of the functional compound Z* to the aminated copolymer (P1), a coupling agent (EDC+NHS) in the form of the stock solution is preferably used, while for ionic binding, a coupling agent is omitted.

The use of stock solutions for the functional compound Z* and the coupling agent easily allow to vary the contents in compound Z* and coupling agent in the precipitation bath.

### Polymer dope solution

Any of the aminated PSU or PES copolymers (P1) made according to the procedures provided in Examples 3 and 4 may be used as substrates to attach a functional compound Z* either by ionic bond or covalent bond such as the functional compounds used in **Examples 5 to 14.**

A polymer solution containing from 10%w/w to 40%w/w of at least one PAES copolymer (P1) in a solvent such as DMAc is filtered, preferably through a 2.7-micron glass fiber filter, before casting a membrane. The filtrate should be clear, bright solution, with no evidence of particulate contamination. The filtrate, like the original polymer solution may be colored.

### Precipitation bath

A fresh precipitation bath comprising from 5% to 40% w/w solvent (e.g., DMAc) in a non-solvent (preferably, deionized water) may be used for the formation of each membrane.

### Casting of dope solution

Membranes may be cast, at room temperature, by hand using a 6mil draw bar with glass plates (10"x6"x1/4"). The glass plates are stored in deionized water, and are damped dry prior to casting a film. Typically, approximately 3 g (target range: 2.75 - 3.25g) of the dope polymer solution are cast; this results in a >90% usage of polymer solution, i.e. >90% of the polymer solution is in the form of the membrane, and the remainder was wastage (stuck to the draw bar).

### Formation and washing of porous membrane

The precipitation bath (500g of 5%w/w DMAc in deionized water as precipitation medium) is prepared within 1-2 hours of immersion of the cast membrane. A clean polypropylene storage box (nominal 1 gallon capacity, 13"x8"x5") is used as the precipitation bath container.

The glass plate with the cast dope polymer solution (3 g) spread on its surface (cast film) is immediately immersed into a 500-g precipitation bath containing the functional compound **Z*** (see **Table 4)** by carefully sliding the glass plate into the precipitation bath at as shallow an angle as possible.

The cast membranes are typically held in the precipitation bath for 1 hour. Shorter immersion times in the order of *ca.* 5 minutes generally do not result in any significant attachment of the functional compound Z*. A suitable immersion time varies depending on the initial loading of the functional compound **Z*** into the precipitation bath; the immersion time may vary from 10 to 60 min. or from 10 to 30 min. or from 30 to 60 min.

After 1-hour immersion, the glass plate and membrane are removed from the precipitation bath. The membrane is then washed under gently running deionized water for 1 minute. Then the membrane is immersed in 1 kg of a fresh water bath for 1 hour. After 1 hour, the membrane is washed with gently running deionized water for 1 minute, and is then allowed to air dry at ambient temperature.

While preferred embodiments of this invention have been shown and described, modifications thereof can be made by one skilled in the art without departing from the spirit or teaching of this invention. The embodiments described herein are exemplary only and are not limiting. Many variations and modifications of systems and methods are possible and are within the scope of the invention. Accordingly, the scope of protection is not limited by the description set out above, but is only limited by the claims which follow, that scope including all equivalents of the subject matter of the claims. Each and every claim is incorporated into the specification as an embodiment of the present invention. Thus, the claims are a further description and are an addition to the preferred embodiments of the present invention.

## Claims

1. A functionalized polyarylethersulfone (PAES) copolymer (P2) comprising:
- recurring units (R_{P2}) of formula (M): 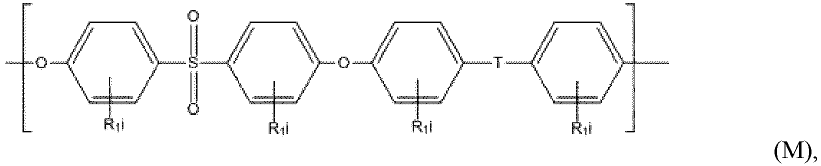
- recurring units (R*_{P2}) of formula (Q): 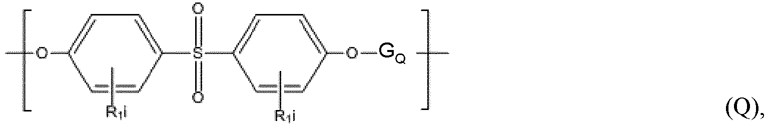
wherein
- each R₁ is independently selected from the group consisting of a halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- each i is an integer independently selected from 0 to 4;
- T is selected from the group consisting of a bond, -CH₂-; -O-; -SO₂-; -S-; -C(O)-;-C(CH₃)₂- ;-C(CF₃)₂-; -C(=CCl₂)-; -C(CH₃)(CH₂CH₂COOH)-; -N=N-; -RaC=CRb-, where each Rₐ and R_{b}, independently of one another, is a hydrogen or a C1-C12-alkyl, C1-C12-alkoxy, or C6-C 18-aryl group; -(CF₂)ₘ- with m being an integer from 1 to 6; an aliphatic divalent group, linear or branched, of up to 6 carbon atoms, preferably-(CH₂)_{m'}- with m' being an integer from 1 to 6; and combinations thereof;
- G_{Q} is selected from the group consisting of at least one of the following formulae (G_{Q1}), (G_{Q2}), (G_{Q3}), (G_{Q4}), (G_{Q5}), or (G_{Q6}): 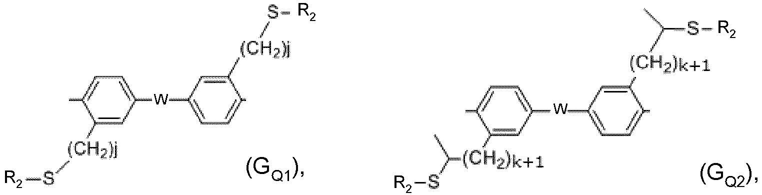 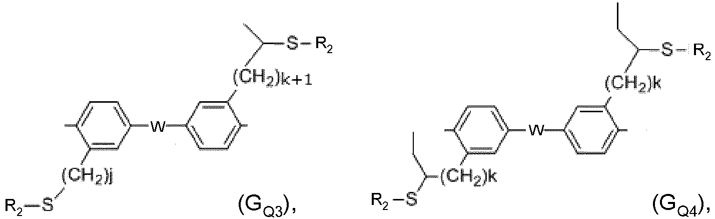 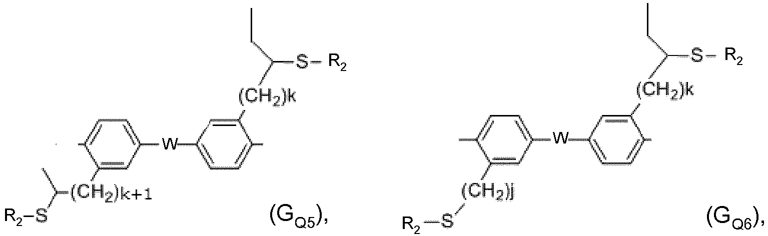
wherein
- each k is an integer independently selected from 0 to 4;
- each j is an integer independently selected from 2 to 7;
- W is a bond, -C(CH₃)₂- or -SO₂-, preferably -C(CH₃)₂- or -SO₂-, more preferably-C(CH₃)₂-;
- R₂ is represented by the following formula: -(CH₂)ₚ-NR_{c}**Z**,
with p being an integer selected from 1 to 5, preferably p being 2,
with R_{c} being independently a C1-C6 alkyl, H or an halide X selected from Cl, Br or I; R_{c} preferably being H or X,
with **Z** representing a functional moiety which is coupled to R₂, preferably bound to the nitrogen atom in R₂; and
the moiety **Z** being selected from the group consisting of:
1. a tri-C2⁺ alkyl moiety [ moiety **Z1** ] which forms a quaternary ammonium halide salt with the nitrogen atom of R₂;
2. a tri-methyl moiety [ moiety **Z2** ] which forms a quaternary ammonium halide salt with the nitrogen atom of R₂;
3. a alkyl carbonyl moiety [ moiety **Z3** ];
4. a carboxylic acid moiety [ moiety **Z4** ];
5. an aromatic sulfonate moiety [ moiety **Z5** ];
6. a sugar acid moiety [ moiety **Z6** ];
7. a zwitterionic moiety [ moiety **Z7** ];
8. a haloalkyl carbonyl moiety [ moiety **Z8** ];
9. a hydroxyl moiety [ moiety **Z9** ];
10. a multifunctional moiety [ moiety **Z10** ] comprising two or more complementary functional moieties; or
any combination of two or more moieties **Z1** to **Z10.**

2. The functionalized PAES copolymer (P2) of claim 1, wherein T in recurring units (R_{P2}) is selected from the group consisting of a bond, -SO₂- and -C(CH₃)₂-.

3. The functionalized PAES copolymer (P2) of any one of claims 1 to 2, wherein i is zero for each R₁ of the recurring units (R_{P2}) and (R*_{P2}).

4. The functionalized PAES copolymer (P2) of any one of claims 1 to 3, wherein k is 0 and j is 3 in the recurring units (R*_{P2}).

5. The functionalized PAES copolymer (P2) of any one of claims 1 to 4, wherein the molar ratio of recurring units (R_{P2})/recurring units (R*_{P2}) varies from 1/100 to 100/1, or from 1/5 to 100/1, or from 1/3 to 50/1, or from 1/3 to 30/1 or from 1/3 to 20/1, or preferably from 1/2 to 50/1, or from 1/2 to 30/1 or from 1/2 to 20/1.

6. The functionalized PAES copolymer (P2) of any one of claims 1 to 5, wherein the recurring units (R_{P2}) have formula according to formulae (M1), (M2) or (M3):

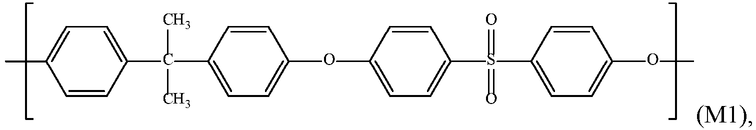

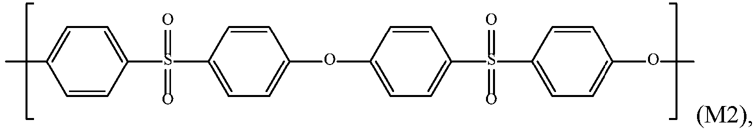

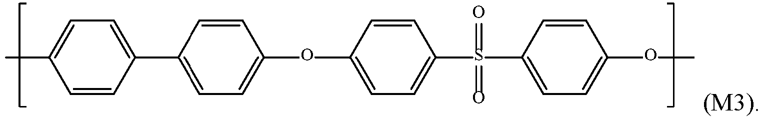

7. The functionalized PAES copolymer (P2) of any one of claims 1 to 6, wherein R₂ in at least one of the formulae (G_{Q1}), (G_{Q2}), (G_{Q3}), (G_{Q4}), (G_{Q5}), (G_{Q6}) is : - (CH₂)₂ - NH**Z** or - (CH₂)₂ - N⁺**Z**X⁻, in which X is an halide selected from Cl, Br or I.

8. The functionalized PAES copolymer (P2) of any one of claims 1 to 7, comprising collectively at least 80 mol.% of the recurring units (R_{P2}) and (R*_{P2}), based on the total number of moles of recurring units in the functionalized PAES copolymer (P2) .

9. The functionalized PAES copolymer (P2) of any one of claims 1 to 8, further comprising
- recurring units (R*_{P1}) of formula (N): 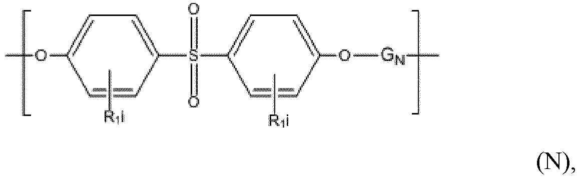
wherein
- each R₁ and each i are the same as in the recurring units (R*_{P2});
- G_{N} is at least one formula selected from the group consisting of following formulae (G_{N1}), (G_{N2}), (G_{N3}), (G_{N4}), (G_{N5}) and (G_{N6}): 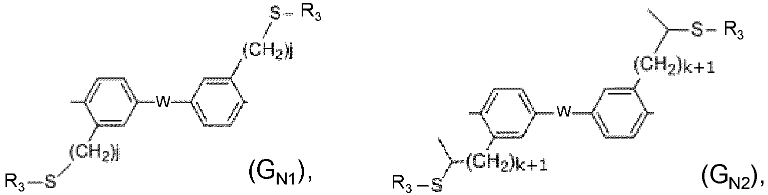 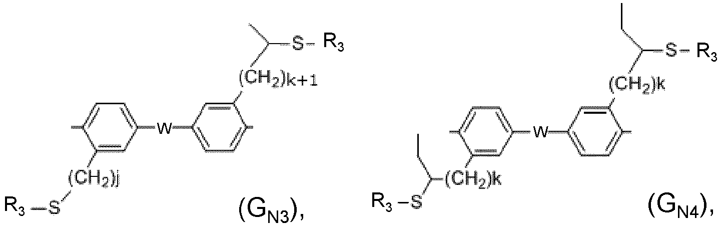 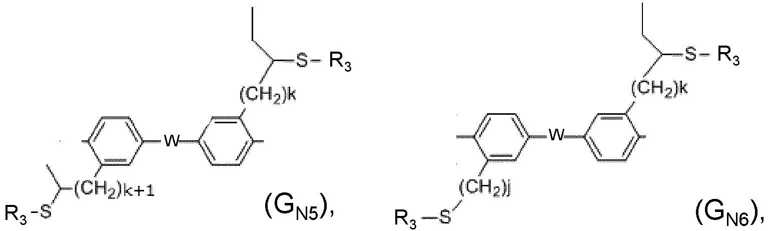
wherein
- each k is an integer independently selected from 0 to 4;
- each j is an integer independently selected from 2 to 7;
- W is a bond, -C(CH₃)₂- or -SO₂-, preferably -C(CH₃)₂- or -SO₂-, more preferably -C(CH₃)₂-;
- R₃ is represented by the following formula: -(CH₂)ₚ-NHR_{d}, with p being selected from 1 to 5, with Rd being independently a C1-C6 alkyl or H, preferably represented by following formula: -(CH₂)₂-NHR_{d} or -(CH₂)ₚ-NH₂, more preferably represented by following formula: -(CH₂)₂-NH₂.

10. The functionalized PAES copolymer (P2) of any one of claims 1 to 9, wherein **Z** in R₂ is at least one functional moiety selected from the group consisting of :
- a moiety **Z1** containing three cycloalkyl groups, each of which is bound to the N atom of R₂ and being of formula: **-(C_{y}H_{2y-1})₃** with y being an integer from 3 to 12, preferably y being 5 or 6; or containing three linear C2⁺ alkyl groups, each of which is bound to the N atom of R₂, and being of formula: -(CₙH₂ₙ₊₁)₃ in which n is an integer of from 2 to 10, or from 3 to 10, or from 4 to 10, or from 5 to 9, or preferably n being 6; **Z1** preferably being of formula: -(C₆H₁₃)₃ **(Z1')** or -(C₆H₁₁)₃ **(Z1");**
- a moiety **Z2** of formula: -(CH₂)₃;
- an alkyl carbonyl moiety **Z3** containing a C2-C12 linear alkyl group of the formula: -C(O)-(CH₂)ₙ-CH₃ with n being an integer of from 2 to 11, from 3 to 10, from 4 to 10, or from 5 to 9, or n preferably being 6 or containing a C3-C12 cyclic alkyl group, and being of formula: -C(O)-(C_{y}H_{2y}-₂)_{n'}-CH₃ with y being an integer from 3 to 12, y preferably being 5 or 6, and n' being an integer of from 1 to 5, or n' preferably being 1 or 2; said moiety **Z3** preferably being -C(O)-(CH₂)₆-CH₃ **(Z3')** or -C(O)-(C₆H₄)-CH₃ (**Z3"**);
- a carboxylic acid moiety **Z4** represented by any of the following formulae: -C(O)-(CH₂)ₙ-COOH, -C(O)-(C_{y}H_{2y-2})_{w+1}-COOH or -C(O)-(CH₂)ₙ-N [(CH₂)_{w}-COOH]₂, with n being an integer of from 1 to 8, from 1 to 7, from 1 to 6, from 1 to 5, or from 1 to 3, n preferably being 2; with w being 0 or an integer from 1 to 5, or being 0, 1, 2, or 3, w preferably being 0 or 1; and with y being an integer from 3 to 12, y preferably being 5 or 6; said moiety **Z4** preferably represented by any of the following formulae: -C(O)-(CH₂)₂-COOH, -C(O)-(C_{y}H_{2y-2})_{w+1}-COOH, or -C(O)-(CH₂)₂-N [(CH₂)_{w}COOH]₂, with w being 0 or 1 and y being 5 or 6;
- the aromatic sulfonate moiety **Z5** of formula: -C(O)-Ar-SO₃M, with **Ar** being an aromatic ring which is unsubstituted (meaning of formula -C₆H₄-) or substituted by one to four C1-C5 alkyl groups; and **M** being an alkali metal, such as K or Na; said moiety **Z5** preferably being of formula: -C(O)-C₆H₄-SO₃M **(Z5');**
- a sugar acid moiety **Z6** derived from a sugar acid selected from uronic or alduronic acids (e.g., glucuronic acid, galacturonic acid, mannuronic acid, alluronic acid, iduronic acid, guluronic acid), gluconic acid (stereoisomer of 2,3,4,5,6-pentahydroxy hexanoic acid), glyceric acid, N-glycolylneuraminic acid, hexenuronic acid, isosaccharrininc acid, lactobionic acid, threonic acid, xylonic acid, lyxonic acid; any polymer or copolymer made from one or more of these acids, such as alginic acid; any alkali metal salt of these acids, such as glucuronate or alginate; or any combination thereof; said moiety **Z6** preferably being of formula: 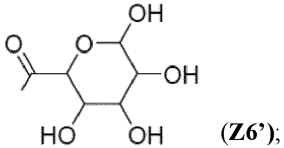
- the zwitterionic moiety **Z7** being derived from a betaine (meth)acrylate; said moiety **Z7** preferably being derived from [2-(Methacryloyloxy)ethyl]dimethyl-(3-sulfopropyl)ammonium hydroxide (DMAPS);
- the haloalkyl carbonyl moiety **Z8** of formula: -C(O)- (CH₂)_{w}X, in which X is an halide selected from Br, I or Cl, X preferably being Cl, and with w being selected from 1 to 5, w being preferably 1; said moiety **Z8** preferably being of formula: -C(O)-CH₂Cl **(Z8');**
- the hydroxyl moiety **Z9** being derived from a linear or cyclic alcohol or polyol derived from an aliphatic or cycloaliphatic alcohol containing an epoxy ring, preferably derived from glycidol, 7-oxabicyclo[4.1.0]heptan-2-ol, or 2-oxiraneethanol; said moiety **Z9** preferably being a polyol of formula: 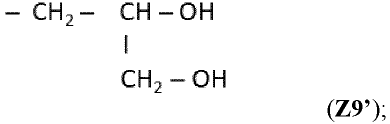
- the multifunctional moiety **Z10** comprising a combination of carboxylic and olefinic moieties; **Z10** preferably being of formula : -C(O)-CH=CH-COOH **(Z10');** and
- any combination thereof.

11. The functionalized PAES copolymer (P2) of any one of claims 1 to 10, wherein
when the functional moiety **Z** is a moiety Z6 derived from a sugar acid polymer or copolymer (such as derived from an alginate), the functional moiety **Z6** has a molecular weight (Mn) of:
- at most 700,000 g/mol, at most 600,000 g/mol, at most 500,000 g/mol or at most 400,000 g/mol, and/or
- at least 1,000 g/mol, at least 2,000 g/mol, at least 3,000 g/mol, at least 5,000 g/mol, or at least 10,000 g/mol; or
when the functional moiety **Z** is not a sugar acid polymer or copolymer, the functional moiety **Z** has a formula weight of:
- less than 3000 g/mol, at most 2500 g/mol, at most 2000 g/mol, at most 1500 g/mol, at most 1000 g/mol, at most 800 g/mol, at most 700 g/mol, at most 600 g/mol, at most 500 g/mol, at most 400 g/mol, at most 380 g/mol, or at most 360 g/mol; and/or
- at least 40 g/mol, at least 45 g/mol, or at least 50 g/mol.

12. A process for preparing the functionalized PAES copolymer (P2) of any one of claims 1 to 11, comprising :
- contacting a copolymer (P1) with a functional compound **Z*,** optionally in the presence of a coupling agent, in a solvent, to couple the functional compound **Z*** to the aminated PAES copolymer (P1) to make the functionalized PAES copolymer (P2),
wherein the functional compound **Z*** is at least one compound selected from the group consisting of:
1. a C2⁺ haloalkane [compound **Z1*];**
2. a methyl halide [compound **Z2*];**
3. an alkanoyl halide [compound **Z3*];**
4. a carboxylic acid anhydride [compound **Z4*** ];
5. an aromatic sulfonic acid or sulfonate salt [compound **Z5*];**
6. a sugar acid or salt thereof [compound **Z6*];**
7. a betaine (meth)acrylate zwitterionic compound [compound **Z7*];**
8. a haloacetyl halide [compound **Z8*];**
9. a linear or cyclic alcohol or polyol [compound **Z9*];**
10. maleic anhydride [compound **Z10*],** or
11. any combination of two or more thereof;
wherein the aminated PAES polymer (P1) comprising:
- recurring units (R_{P1}) of said formula (M) which are the same as the recurring units (R_{P2}), and
- recurring units (R*_{P1}) of formula (N): 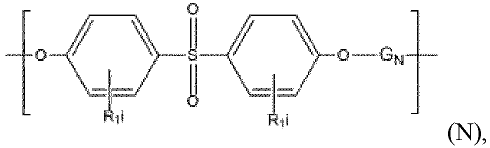
wherein
- each R₁ and each i in formula (N) are the same as in the recurring units (R*_{P2}); and
- G_{N} in formula (N) is at least one formula selected from the group consisting of following formulae (G_{N1}), (G_{N2}), (G_{N3}), (G_{N4}), (G_{N5}) and (G_{N6}): 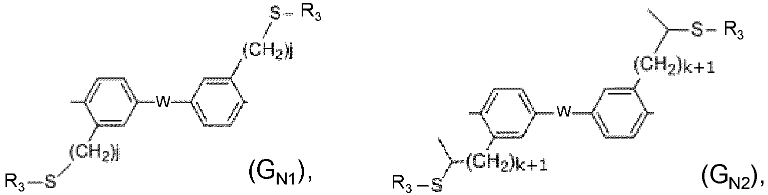 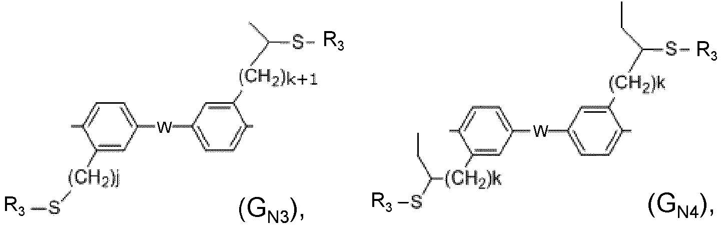 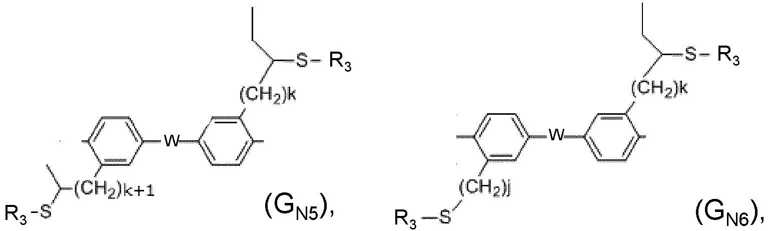
wherein
- each k is an integer independently selected from 0 to 4;
- each j is an integer independently selected from 2 to 7;
- W is a bond, -C(CH₃)₂- or -SO₂-, preferably -C(CH₃)₂- or -SO₂-, more preferably -C(CH₃)₂-; and
- R₃ is represented by the following formula: - (CH₂)ₚ - NHRa, with p being selected from 1 to 5, with R_{d} being independently a C1-C6 alkyl or H, preferably represented by the following formula: - (CH₂)ₚ - NH₂, more preferably represented by the following formula: - (CH₂)₂ - NH₂.

13. The process of claim 12, wherein the functional compound **Z*** is at least one compound selected from the group consisting of:
- a C2⁺ haloalkane functional compound **Z1*** containing a straight-chain structure, represented by formula: **X(CₙH₂ₙ₊₁)** in which n is an integer of from 2 to 10, or from 3 to 10, or from 4 to 10, or from 5 to 9, preferably n being 6, and with X being an halide selected from Br, Cl, or I; or containing a cyclic structure, represented by any of formula: **X-(C_{y}H_{2y-2})_{n'}-CH₃** or **X-(C_{y}H_{2y-1})_{n'}** with y being an integer from 3 to 10, preferably y being 5 or 6; n' being an integer of from 1 to 5, preferably n' being 1 or 2; and X being an halide selected from Br, Cl, or I, preferably X being Cl; **Z1*** being an hexyl halide, preferably in which the halide is Br, Cl, or I, more preferably in which the halide is Br;
- a functional compound **Z2*** being methyl chloride;
- a functional compound **Z3*** being an acyl chloride containing the -C(O)X group, in which X is an halide; an octonoyl halide, preferably in which the halide is Br, Cl, or I; **Z3*** being preferably octonoyl chloride;
- a functional compound **Z4*** being a carboxylic acid anhydride or a nitrilo-tricarboxylic acid; **Z4*** being preferably succinic anhydride or 2,2',2"-nitrilotriacetic acid;
- a functional compound **Z5*** being a carboxy aryl sulfonic acid or sulfonate and represented by formula: **C(O)-Ar-SO₃M** with M being H or an alkali metal salt, preferably H or Na, and **Ar** being an aromatic ring which is unsubstituted or substituted by one to four C1-C5 alkyl groups; **Z5*** preferably being 3-carboxybenzene sulfonate of formula: **C(O)-C₆H₄-SO₃M,** with M being H or an alkali metal salt, preferably H or Na;
- a functional compound **Z6*** being selected from at least one uronic or alduronic acid (e.g., glucuronic acid, galacturonic acid, mannuronic acid, alluronic acid, iduronic acid, guluronic acid), gluconic acid (stereoisomer of 2,3,4,5,6-pentahydroxy hexanoic acid), glyceric acid, N-glycolylneuraminic acid, hexenuronic acid, isosaccharrininc acid, lactobionic acid, threonic acid, xylonic acid, lyxonic acid; any polymer or copolymer made from one or more of these acids, such as alginic acid; any alkali metal salt of these acids, such as glucuronate or alginate; or any combination thereof; said **Z6*** preferably being glucuronic acid or glucuronate sodium salt;
- a functional compound **Z7*** being a betaine sulfo(meth)acrylate or betaine carboxy(meth)acrylate; **Z7*** preferably being [2-(Methacryloyloxy)ethyl]dimethyl-(3-sulfopropyl)ammonium hydroxide (DMAPS);
- a functional compound **Z8*** being chloroacetyl chloride;
- a functional compound **Z9*** being an aliphatic or cycloaliphatic alcohol containing an epoxy ring, preferably selected from glycidol, 7-oxabicyclo[4.1.0]heptan-2-ol, or 2-oxiraneethanol; said **Z9*** more preferably being glycidol;
- a functional compound **Z10*** being maleic anhydride; and
- any combination of two or more thereof.

14. The process of claim 12 or 13, wherein the coupling agent is used in the process to covalently bind the bioactive compound to the aminated PAES copolymer (P1), and wherein the coupling agent comprises at least one compound selected from the group consisting of N-(3-Dimethylaminopropyl)-N'-ethylcarbodiimide hydrochloride **(EDC),** N-Hydroxy succinimide **(NHS),** 1-[3-(Dimethylamino)propyl]-3-ethylcarbodiimide methiodide, 1-(3-Dimethylaminopropyl)-3-ethylcarbodiimide, which is polymer-bound, HOAt (1-Hydroxy-7-azabenzotriazole), PyBOP (benzotriazol-1-yl-oxytripyrrolidinophosphonium hexafluorophosphate), and PyAOP ((7-Azabenzotriazol-1-yloxy)tripyrrolidinophosphonium hexafluorophosphate).

15. Use of the functionalized PAES copolymer (P2) of any one of claims 1 to 11, for making a chromatography polymeric stationary material, preferably a chromatography membrane, beads, powder, pellets, capillary tubes, sheets and/or films.

16. A method for preparing an article comprising the functionalized PAES copolymer (P2) of any one of claims 1 to 11, comprising : performing one of the following:
- method a) : using the functionalized PAES copolymer (P2) in forming the chromatography polymeric stationary material, preferably via phase inversion occurring in a liquid phase; or
- method b) : contacting a copolymer (P1) with at least one functional compound **Z*** to make the functionalized PAES copolymer (P2) while at the same time forming the chromatography polymeric stationary material; or
- method c) : contacting a pre-formed chromatography polymeric stationary material comprising an aminated copolymer (P1) with at least one functional compound **Z*** to make the functionalized PAES copolymer (P2) ;
wherein the contacting step in said method (b) or (c) is carried out, optionally in the presence of a coupling agent, in a solvent, to bind the at least one functional compound **Z*** to the nitrogen atoms of the side chains of the aminated PAES copolymer (P1) to form the at least one functional moiety **Z** and make the functionalized PAES copolymer (P2), and
wherein the aminated polymer (P1) comprises:
- recurring units (R_{P1}) of said formula (M), and
- recurring units (R*_{P1}) of formula (N): 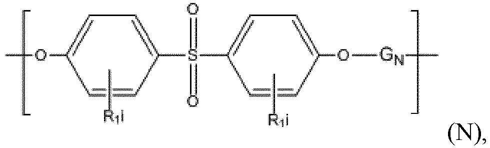
wherein
- T is the same as in the recurring units (R_{P2});
- each R₁ and each i are the same as in the recurring units (R*_{P2}); and
- G_{N} is at least one formula selected from the group consisting of following formulae (G_{N1}), (G_{N2}), (G_{N3}), (G_{N4}), (G_{N5}) and (G_{N6}): 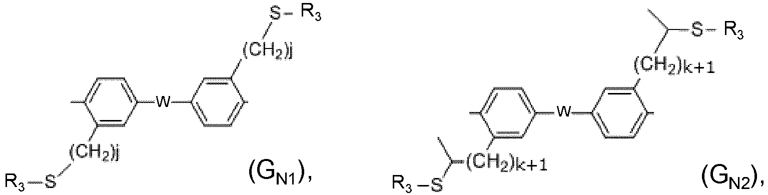 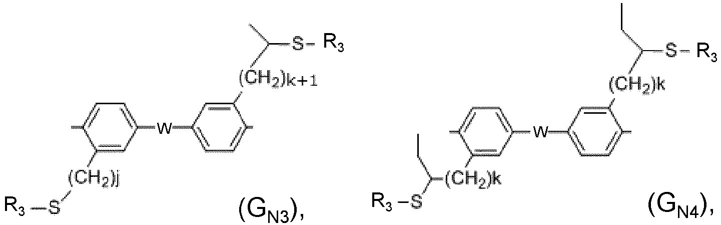 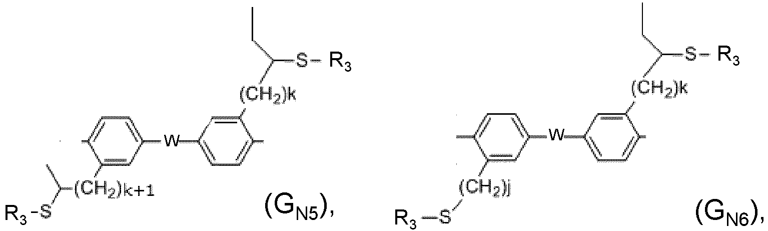
wherein
- each k is an integer independently selected from 0 to 4;
- each j is an integer independently selected from 2 to 7;
- W is a bond, -C(CH₃)₂- or -SO₂-, preferably -C(CH₃)₂- or -SO₂-, more preferably -C(CH₃)₂-;
- R₃ is represented by the following formula: -(CH₂)ₚ-NHR_{d}, with p being selected from 1 to 5, with R_{d} being independently a C1-C6 alkyl or H, preferably represented by the following formula: -(CH₂)ₚ-NH₂, more preferably represented by the following formula: -(CH₂)₂-NH₂.

17. A chromatography polymeric stationary material, comprising or made from the functionalized PAES copolymer (P2) of any one of claims 1 to 11 or manufactured by the method according to any one of claims 12-14, being selected from the group consisting of functionalized membranes, beads, powder, pellets, sheets, and films.

18. Use of the chromatography polymeric stationary material of claim 17 for separating a target biomolecule from a biological fluid.

19. Use of the chromatography polymeric stationary material of claim 17, being preferably a functionalized membrane, bead, pellet, powder, capillary tubes, sheet and/or film, in affinity chromatography, in hydrophobic interaction chromatography and/or in ion exchange chromatography.
